(19) Europäisches Patentamt / European Patent Office / Office européen des brevets

(11) **EP 1 271 361 B1**

(12) **FASCICULE DE BREVET EUROPEEN**

(45) Date de publication et mention
de la délivrance du brevet:
**25.08.2010 Bulletin 2010/34**

(51) Int Cl.:
**G06F 17/30** *(2006.01)*

(21) Numéro de dépôt: **02291396.6**

(22) Date de dépôt: **06.06.2002**

(54) **Procédé de création automatique d'une base de données images interrogeable par son contenu sémantique**

Verfahren zur automatischen Erzeugung einer, nach ihrem semantischen Inhalt suchbaren Bilderdatenbank

Method for automatic creation of a database of images searchable by its semantic content

(84) Etats contractants désignés:
**AT BE CH CY DE DK ES FI FR GB GR IE IT LI LU MC NL PT SE TR**

(30) Priorité: **07.06.2001 FR 0107481**

(43) Date de publication de la demande:
**02.01.2003 Bulletin 2003/01**

(73) Titulaire: **Commissariat à l'Énergie Atomique et aux Énergies Alternatives**
**75015 Paris (FR)**

(72) Inventeurs:
• **Thomas, Corinne**
**52000 Chaumont (FR)**
• **Essafi, Hassane**
**91400 Orsay (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
**US-A- 5 751 286    US-A- 5 930 783**

• RAO A R ET AL: "THE RELATIONSHIP BETWEEN TEXTURE TERMS AND TEXTURE IMAGES: A STUDY IN HUMAN TEXTURE PERCEPTION" STORAGE AND RETRIEVAL FOR STILL IMAGE AND VIDEO DATABASES 4. SAN JOSE, FEB. 1 - 2, 1996, PROCEEDINGS OF SPIE, BELLINGHAM, SPIE, US, vol. 2670, 1 février 1996 (1996-02-01), pages 206-214, XP000642571 ISBN: 0-8194-2044-1

**Description**

La présente invention a pour objet un procédé de création automatique, à partir d'images initiales non indexées, d'une base de données images interrogeable par son contenu sémantique.

L'invention concerne ainsi un procédé d'indexation et de recherche d'images grâce à leur contenu sémantique.

Le but de l'invention est d'offrir la possibilité d'interroger les bases d'images par le contenu, d'une manière ergonomique et intuitive pour l'utilisateur.

Une première solution envisageable pourrait consister à réutiliser les techniques issues de la recherche d'informations textuelles, sur des images annotées au préalable manuellement, afin d'interroger la base d'images. Cela consiste à formuler une requête textuelle afin d'obtenir en retour un ensemble d'images dont la description textuelle (fruit d'une indexation préalable) s'apparie plus ou moins bien à la requête. Une telle approche permettrait un accès au contenu sémantique des images, mais malheureusement elle implique une indexation qui est faite de façon manuelle. Ce type de procédure devient donc rapidement long, pénible et rédhibitoire en présence d'un grand nombre d'images. Par ailleurs, ce style d'indexation ne serait utilisable efficacement que pour des bases où les indexeurs et les utilisateurs possèdent le même niveau d'expertise. De plus, compte tenu du temps nécessaire à l'élaboration du catalogue d'images, il est illusoire de pouvoir décrire les images avec suffisamment de précision ou d'objectivité, d'autant plus que l'objet de la recherche n'est pas toujours connu pendant le processus d'indexation. Des éléments importants de l'image seraient alors négligés. De plus, un élément tel qu'un bâtiment, un véhicule ou un personnage qui sera décrit via la catégorie dont il fait partie, ne sera identifié qu'après un examen visuel de l'image.

Une autre solution possible consisterait à reprendre les travaux des chercheurs en vision par ordinateur en faisant appel à l'analyse, au traitement, au codage et à la compréhension d'images. Pour cela, il faudrait utiliser des systèmes exploitant les propriétés visuelles des images (texture, forme, couleur). Ce type d'approche pourrait permettre une indexation automatique, objective, sans connaissance a priori. Cependant, cette approche se heurterait à la barrière sémantique puisque deux images peuvent être perceptuellement similaires sans pour autant être cognitivement semblables et, de même, deux images cognitivement similaires peuvent être tout à fait différentes perceptuellement.

Avec ce style d'approche appelée "recherche par l'exemple", il existe divers produits qui prennent pour question un échantillon ressemblant à l'image que l'utilisateur recherche. Diverses solutions ont ainsi été proposées :

- la première consiste à rechercher un objet en décrivant son contour ou sa texture. Mais pour que ce type d'approche fonctionne, il faut avoir analysé numériquement les images pour en extraire les informations correspondantes. Il n'existe malheureusement pas de méthode d'extraction de contour ou de texture d'objet qui soit efficace dans tous les cas et, de plus, ces méthodes sont mises en échec quand les objets sont partiellement masqués, dans l'ombre, ou quand ils sont éclairés de façons différentes sur l'échantillon et sur les images de base ;

- la seconde approche possible consiste à comparer l'échantillon avec les différentes parties des images ; la comparaison est positive quand les points d'un fragment d'image ont la même teinte que les points de l'échantillon. En plus du temps de calcul important dû au nombre d'opérations nécessaires, l'échantillon doit être pris dans des conditions de prise de vue similaires à celles des images de la base (éclairage, distance, orientation), ce qui limite l'impact de ce type d'approche.

Un autre inconvénient résulte du fait que l'utilisateur doit posséder un échantillon représentatif de l'image qu'il cherche. Or, il existe de nombreux cas où l'on n'en possède pas, l'utilisateur ayant seulement l'idée de ce qu'il cherche.

L'invention vise ainsi à créer une synergie entre les descriptions textuelle et perceptuelle afin de disposer d'une plus grande souplesse lors de l'interrogation d'une base et d'augmenter la précision des réponses tout en réduisant le temps de calcul.

Ces buts sont atteints, conformément à l'invention, grâce à un procédé de création automatique, à partir d'images initiales non indexées, d'une base de données images interrogeable par son contenu sémantique, caractérisé en ce qu'il comprend les étapes suivantes :

a) construire une première base de données indexées constituant un dictionnaire d'informations thématiques en utilisant des textes généraux de départ énumérant les constituants d'un thème qui sont soumis à une étape de découpage-normalisation conduisant à des listes de mots qui sont ensuite soumises à une analyse statistique pour déduire des poids de mots;

b) construire une deuxième base de données indexées constituant un vade-mecum regroupant un ensemble de descriptions textuelles d'objets élémentaires usuels sous la forme d'imagettes indexées de façon textuelle et picturale,

c) analyser chaque image initiale de façon globale pour identifier et répertorier différentes zones de l'image de façon grossière,

d) comparer chaque image initiale analysée de façon globale avec des images précédemment indexées dans la base de données images à constituer,

e) classer dans la base de données images une image initiale analysée de façon globale si le résultat de la comparaison avec des images précédemment indexées révèle un degré de similitude supérieur à un seuil prédéterminé, et sinon

f) analyser chaque image initiale de façon locale d'après les étapes suivantes :

g) au cours de l'analyse locale d'une image initiale, procéder à une pluralité de segmentations de cette image en composants homogènes en utilisant une pluralité de critères différents pour identifier et isoler une pluralité de séries d'objets (Ai, Bi, Ci,...) constitués par des imagettes segmentées associées à des descripteurs géométriques de boîtes englobantes desdits objets (Ai, Bi, Ci,...),

h) après l'étape consistant à procéder à une pluralité de segmentations, réaliser une fusion des résultats des procédés de segmentation,

i) caractériser par des valeurs numériques chacune des imagettes d'objet résultant d'une fusion après les opérations de segmentation et de fusion et associées à des descripteurs géométriques des boîtes englobantes des différents objets,

j) comparer chacune des imagettes d'objet résultant des opérations de segmentation et de fusion avec les imagettes indexées de la deuxième base de données indexées et fournir avec leur taux de pertinence la liste des descriptions textuelles d'objets élémentaires usuels en concordance avec lesdites imagettes d'objet résultant des opérations de segmentation et de fusion,

k) pour chacune des imagettes d'objet résultant des opérations de segmentation et de fusion, caractériser de façon textuelle la couleur par appariement de l'histogramme de chaque imagette convertie dans un espace de couleurs avec les termes d'un dictionnaire chromatique,

l) pour chacune des imagettes d'objet résultant des opérations de segmentation et de fusion, caractériser de façon textuelle la texture par appariement du vecteur caractéristique de l'objet avec ceux d'un dictionnaire de textures indexées,

m) déterminer les aspects géométriques des objets les uns par rapport aux autres, et caractériser de façon textuelle les relations spatiales et/ou les formes de ces différents objets, et

n) après analyse des différents constituants de l'image initiale à travers lesdites imagettes d'objet résultant des opérations de segmentation et de fusion associées à des descriptions textuelles d'objets élémentaires usuels, introduire ces données dans la base d'images à constituer,

Après l'étape m) de détermination des emplacements géométriques des objets les uns par rapport aux autres et de caractérisation de façon textuelle des relations spatiales de ces différents objets, dans une étape o), on établit à partir des relations de dépendance entre ces différents objets et d'une comparaison avec le dictionnaire d'informations thématiques, l'appartenance éventuelle de l'image initiale à un thème.

Après l'étape m) de détermination des emplacements géométriques des objets les uns par rapport aux autres et de caractérisation de façon textuelle des relations spatiales de ces différents objets, dans une étape p), on regroupe les informations textuelles de l'ensemble de l'image indexée, en liaison avec le vade-mecum.

Selon une caractéristique particulière, lors de l'étape e) de classement dans la base de données images, on caractérise des particularités de l'image initiale analysée par rapport à chacune des images précédemment indexées les plus similaires.

Selon un mode de réalisation avantageux, l'étape h) de fusion des résultats des procédés de représentation consiste à ordonner par ordre décroissant de superficie l'ensemble des objets (Ai, Bi, Ci,...) résultant des segmentations afin d'obtenir une liste, puis, tant qu'il y a des objets non visités dans la liste, prendre le premier élément libre de la liste, regarder s'il y a une intersection entre cet élément et les éléments suivants libres de cette liste, s'il y a une intersection entre des objets issus de procédés de segmentation différents, construire un premier graphe (Gi) et marquer ces éléments comme étant non libres, de manière à obtenir une série de premiers graphes (Gi), recommencer les mêmes opérations à partir des mêmes objets (Ai, Bi, Ci,...) résultant des segmentations ordonnés par ordre croissant de superficie, de manière à obtenir une série de deuxièmes graphes (G'i), et regrouper l'ensemble des premier et deuxième graphes (Gi, G'i) de manière à réaliser la fusion des résultats des procédés de segmentation.

Selon un mode particulier de réalisation, lors de l'étape g) de segmentation en composants homogènes des images analysées localement, en utilisant une pluralité de critères différents, on procède :

(i) à une détection des caractéristiques de texture via un filtrage équivalent à un banc de filtres passe-haut et passe-bas,

(ii) à une détection chromatique et achromatique,

(iii) à une détection des contours.

Selon un mode particulier de réalisation possible, lors de l'étape g) de segmentation, la détection des caractéristiques de texture via un filtrage équivalent à un banc de filtres passe-haut et passe-bas comprend un processus de transformation en ondelettes qui est opéré d'une part sur des lignes puis sur des colonnes de l'image avec à chaque fois un filtre passe-bas, caractérisé par la formule $y(i) = 0,5 * x(i) + 0,5 y(i-1)$ et un filtre passe-haut caractérisé par la formule $y(i) = 0,5 * x(i) - 0,5 y(i-1)$, chaque élément $(i, j)$ de la matrice 3D d'attributs résultant de la décomposition étant un vecteur caractérisant la distribution des valeurs des pixels au voisinage du point $(i, j)$.

Dans le cas où l'image à traiter est de grande taille ou présente une résolution élevée, après chaque opération de filtrage par un filtre passe-haut et un filtre passe-bas, on procède à une division par $2^n$ du nombre d'images obtenues de manière à diminuer le nombre de données à traiter, le nombre entier $n$ étant d'autant plus grand que la résolution et la taille de l'image à traiter sont élevées.

Avantageusement, le processus de transformation en ondelettes est réitéré plusieurs fois sur $n$ étages et, après une phase de lissage, on réduit en profondeur la taille de la matrice 3D d'attributs obtenue en ne retenant que le nombre d'images $[2n + (n-1)]$ contenant le plus de détails.

On peut en outre effectuer un processus de recherche de la meilleure partition de la matrice d'attributs au sens de la maximisation de l'énergie.

Selon un mode particulier de réalisation possible, lors de l'étape g) de segmentation, la détection chromatique et achromatique comprend une étape de conversion de l'image vers le modèle HSV (Teinte-Saturation-Valeur), une étape de propagation achromatique pour éliminer l'arrière-plan, une étape d'ouverture effectuée lors d'une première itération pour éliminer le bruit et reconnecter les régions et, dans le cas d'une non-convergence en fin de cette première itération, une étape de fermeture effectuée lors d'une deuxième itération.

Selon encore un mode particulier de réalisation possible, lors de l'étape g) de segmentation, la détection des contours avec un filtre optimal comprend une étape de conversion de l'image RGB (rouge-vert-bleu) en un seul plan de luminance, une étape de réalisation d'une moyenne afin d'éliminer le bruit lié à l'acquisition, une étape de calcul de gradients horizontaux et de gradients verticaux, une étape de sommation des deux images des gradients afin d'obtenir une seule image, une étape de calcul du minimum et du maximum de l'image obtenue afin de déterminer des valeurs haut et bas de seuillage, une étape de seuillage par hystérésis par rapport auxdites valeurs haut et bas de seuillage précédemment déterminées, une étape de réalisation d'une ouverture morphologique et une étape de réalisation de multiples fermetures morphologiques.

D'autres caractéristiques et avantages de l'invention ressortiront de la description détaillée de modes particuliers de réalisation, donnés à titre d'exemples, en référence aux dessins annexés, sur lesquels :

- la Figure 1 représente une image de démonstration à laquelle peut être appliqué le procédé selon l'invention,
- la Figure 2 représente le schéma de principe d'utilisation d'une base de connaissances avec images indexées élaborée conformément au procédé selon l'invention,
- la Figure 3 représente le schéma de la construction d'un dictionnaire de thèmes incorporé dans la base de connaissances de la Figure 2,
- la Figure 4 est un organigramme illustrant un exemple d'algorithme de construction d'un vade-mecum incorporé dans la vase de connaissance de la Figure 2,
- la Figure 5 représente le schéma de l'architecture générale du processus d'indexation d'une image à intégrer dans la base d'images de la base de connaissance de la Figure 2,
- la Figure 6 représente le schéma de l'architecture générale d'une analyse perceptuelle effectuée dans le cadre du processus d'indexation de la Figure 5,
- la Figure 7 représente le schéma d'un exemple de module de segmentation faisant partie de l'analyse perceptuelle illustrée sur la Figure 4,
- la Figure 8 représente le schéma de la transformée en ondelettes correspondant à un premier type de segmentation incorporé dans le module de segmentation de la Figure 7,

- la Figure 9 représente le schéma du résultat d'un processus de représentation au cours de l'analyse perceptuelle de la Figure 6,
- la Figure 10 représente le schéma du module ARES d'exploitation des propriétés inhérentes à la couleur, utilisé dans le cadre de l'analyse perceptuelle de la Figure 6,
- la Figure 11 représente le schéma du module YETI d'exploitation des caractéristiques de la texture des images, utilisé dans le cadre de l'analyse perceptuelle de la Figure 6,
- la Figure 12 représente le schéma du module SPACE de localisation des différents éléments dans l'image, utilisé dans le cadre de l'analyse perceptuelle de la Figure 6,
- la Figure 13 représente le schéma du module Ie de reconnaissance d'objet, utilisé dans le cadre de l'analyse perceptuelle de la Figure 6,
- la Figure 14 représente le schéma de l'architecture générale d'une analyse sémiotique effectuée dans le cadre du processus d'indexation de la Figure 5,
- la Figure 15 représente le schéma d'un module de recherche de thème faisant partie de l'analyse sémiotique illustrée sur la Figure 14,
- la Figure 16 représente le schéma d'un module de recherche de relation de dépendance faisant partie de l'analyse sémiotique illustrée sur la Figure 14,
- la Figure 17 représente le schéma d'un module de projection par inférence faisant partie de l'analyse sémiotique illustrée sur la Figure 14,
- la Figure 18 représente le schéma d'un module de reconstruction faisant partie de l'analyse sémiotique illustrée sur la Figure 14,
- la Figure 19 représente la mise en oeuvre d'un module d'analyse statistique faisant partie de l'analyse sémiotique illustrée sur la Figure 14,
- la Figure 20 montre un exemple d'écran d'indexation d'une image intégrée dans une base de connaissances conformément à l'invention,
- la Figure 21 montre l'architecture générale d'une recherche picturale dans une base de connaissances élaborée conformément à l'invention,
- la Figure 22 montre l'architecture générale d'une recherche textuelle dans une base de connaissances élaborée conformément à l'invention,
- la Figure 23 montre un module d'analyse linguistique faisant partie de la recherche textuelle de la Figure 22,
- la Figure 24 montre un modèle de reformulation de question faisant partie de la recherche textuelle de la Figure 22, et
- la Figure 25 montre un exemple d'écran de résultats d'une recherche textuelle.

L'invention concerne un procédé permettant de créer de façon automatique, puis de consulter, une base de connaissances images. Une base d'images indexées associée à un dictionnaire de concepts est élaborée à partir de documents images initiaux.

Le procédé selon l'invention comprend, pour chaque image de base, l'analyse de l'image à indexer, l'identification des objets de l'image et la description à la fois spatiale et thématique des relations entre les objets pour obtenir une image indexée.

Le procédé engendre ainsi automatiquement un texte de description de l'image, qui décrit sans omission tout ce qui figure sur l'image et crée des liens entre objets pour proposer un contexte ou un thème.

Le procédé est applicable à un ensemble d'images d'entrée pouvant être d'origines très diverses et hétérogènes à la fois dans leur présentation et les sujets concernés.

La caractérisation de l'aspect pictural d'une image à indexer est essentielle et toutes les informations nécessaires à la description de cette image doivent être extraites.

Ces informations sont ensuite synthétisées pour produire ce que l'on appelle la signature de l'image, qui représente fidèlement son contenu. La signature calculée permet ensuite de décrire, de caractériser, de segmenter et d'analyser chaque image en question. Selon les cas, l'analyse peut être globale ou locale, la notion de localité prenant toute son importance avec la complexité de l'image. Dans le cas d'images complexes, une scène est tout d'abord découpée en morceaux afin de reconnaître chacune des parties, puis ces parties sont ré-assemblées en essayant de faire apparaître le lien existant entre chacun de ces objets pour en faire ressortir l'idée directrice.

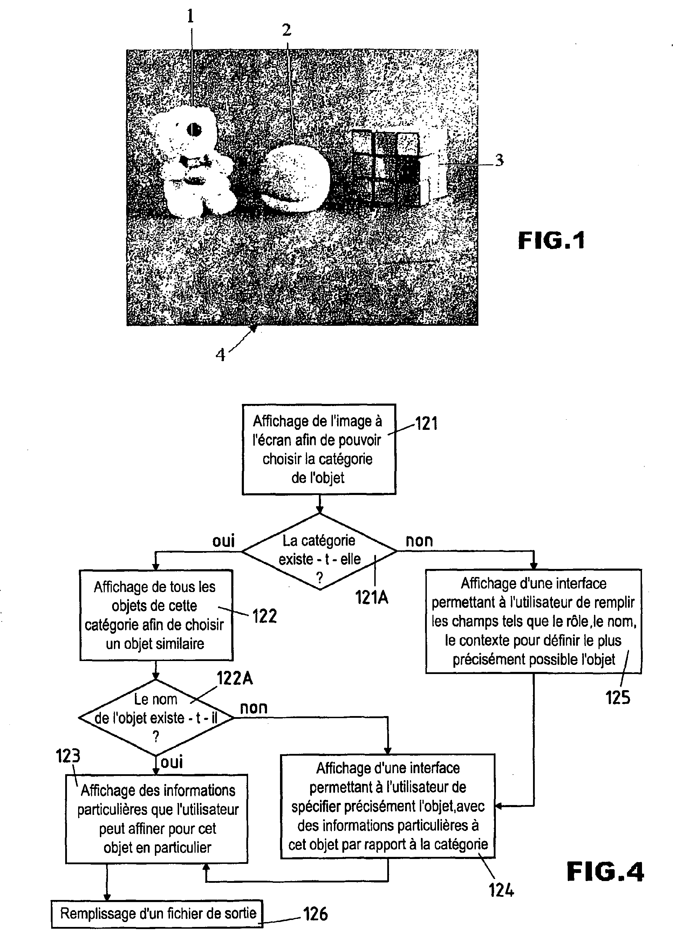

Dans la suite de la description, on prendra essentiellement à titre d'exemple l'image de démonstration de la Figure 1 comportant de gauche à droite un ours en peluche 1, une balle 2 et un cube 3.

Le procédé selon l'invention permet de construire une base de connaissances 10 comprenant un premier élément 11 constitué par un dictionnaire de thèmes (Dithem), un deuxième élément 12 constitué par un vade-mecum, c'est-à-dire un dictionnaire contenant des imagettes d'objets élémentaires usuels et leur contexte, et un troisième élément 13 constitué par une base d'images regroupant un ensemble d'images plus ou moins complexes déjà indexées.

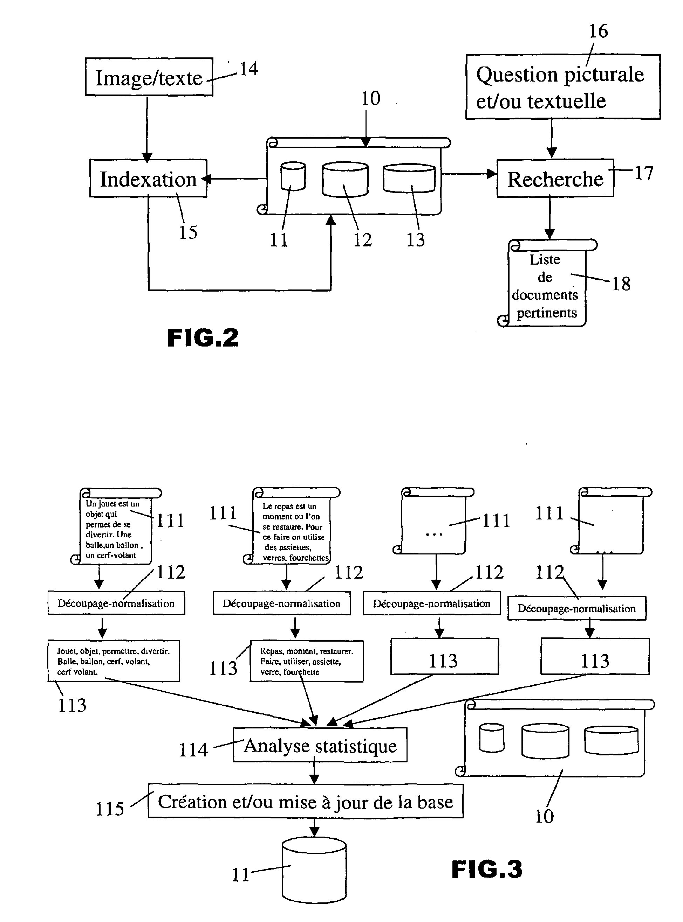

La base de connaissances 10 une fois constituée permet, à partir d'une question picturale et/ou textuelle (module 16 de la Figure 2), d'effectuer une recherche 17 pour fournir une liste 18 de documents pertinents issus de la base de connaissances. Une image et un texte présents dans le module 14 peuvent également, par une étape d'indexation 15, être intégrés dans la base de connaissance 10 et corrélés avec le contenu de celle-ci.

On décrira maintenant la construction des différents modules de la base de connaissances.

La Figure 3 montre les principales étapes d'élaboration d'un dictionnaire de thèmes 11 qui est utilisé ensuite pour extraire l'idée directrice ou le thème véhiculé par l'image.

Pour construire un dictionnaire de thèmes 11, une base de données textuelles est indexée grâce à des textes 111 expliquant les différentes composantes des thèmes.

Par exemple, les mots *"assiette", "fourchette", "couteau"* font partie du thème *"repas"*.

Les textes généraux de départ 111 énumérant les différents constituants d'un thème sont soumis à une étape 112 de découpage-normalisation conduisant à des listes 113 de mots qui sont ensuite soumises à une analyse statistique à l'étape 114. Après l'appel à l'analyse statistique de l'étape 114, on procède à l'étape 115 à la création ou à la mise à jour de la base 11 qui constitue une encyclopédie regroupant les thèmes constituant les images.

La procédure 112 de découpage-normalisation peut par exemple s'effectuer de la manière suivante :

- On découpe le texte de base 111 en unités connues : le paragraphe, la phrase et le mot puis, parfois, on recompose les mots en locutions. Pour ce faire, il est effectué un découpage en mots grâce au repérage des caractères séparateurs de mots. Ainsi, les signes de ponctuations peuvent être considérés comme des séparateurs, bien qu'il existe des exceptions. Par exemple, l'apostrophe est a priori, en français, un séparateur de mots mais en réalité le mot *"aujourd'hui"* vient infirmer cette règle ; l'espace se comporte de la même manière que l'apostrophe, par exemple dans *"compte rendu"*. Inversement, le tiret n'est a priori pas un séparateur, sauf lorsque l'on est dans le cas d'une question *"pleut-il ?"*.

- Après quoi, il est fait appel à un dictionnaire général de langue française, dans le cas considéré. La recherche dans ce dictionnaire a pour but de rechercher les mots composés. Ainsi, si le découpage a donné : *"porte" " - "monnaie"*, la confrontation avec le dictionnaire donnera *"porte-monnaie"*. En outre, cela permet aussi d'attacher des catégories grammaticales aux mots simples et composés.

- Il est ensuite effectué une reconstruction des locutions. Durant cette étape, les expressions qui ont été séparées par le découpage en mots sont recomposées. Par exemple, *"au fur et à mesure"* est considéré comme une locution. C'est le mot *"fur"*, mot de l'expression le plus rarement rencontré seul, qui enclenche en général la recherche des locutions.

- Une analyse syntaxique est alors effectuée afin de connaître les catégories grammaticales de chaque mot afin de mieux pouvoir les ramener sous leur forme normalisée (par exemple, infinitif pour les verbes, masculin singulier pour les adjectifs, singulier ou parfois masculin pour les substantifs). Il s'agit également dans cette partie de rechercher les relations syntaxiques qui existent entre les différents mots d'une phrase afin de pouvoir rechercher une relation identique entre les mots d'une question et entre les mots d'un texte.

- Il est ensuite effectué une analyse des dépendances qui consiste à repérer l'ensemble des Relations Lexicales Sémantiques (RLS), c'est-à-dire les relations syntagmatiques (relations grammaticales unissant les mots d'un texte) et les relations paradigmatiques, c'est-à-dire les relations entre mots hors contexte (par exemple relation de synonymie). Par exemple :

Substantif-adjectif antérieur : *"un petit garçon"*
Substantif-adjectif postérieur : *"le code civil"*
Substantif-substantif : *"le livre d'histoires", "le président X"*
Verbe-agent de l'action : *"la décision est prise par le ministre"*
Verbe-objet de l'action : *"toute personne peut consulter les pièces"*
Verbe-adverbe : *"... sont équipées de manière à fermer hermétiquement"*
Adjectif-adverbe : *"... férocement violent... "*
Adjectif-complément d'adjectif : *"vert bouteille", "attentifs à la leçon"*.

L'analyse statistique 114 a pour but de déduire le poids des mots utilisés dans la base de connaissances. Un mot sera considéré comme ayant une valeur informationnelle d'autant plus grande que c'est un mot rare dans la base. Par exemple, dans une base documentaire sur l'énergie atomique, le terme *"nucléaire"* est bien peu discriminant puisqu'il est présent dans la majorité des documents de la base. Il aura donc un poids informationnel faible.

La construction du vade-mecum 12 consiste en la génération d'une encyclopédie décrivant les caractéristiques des objets que l'on côtoie dans la vie courante.

A chaque image ou imagette d'un objet correspond dans le vade-mecum une description textuelle indiquant l'objet et son environnement et une description picturale sous la forme de traits mathématiques.

Lors de la construction du vade-mecum 12, on fournit en entrée un fichier image contenant un objet élémentaire usuel tel que par exemple une tasse, un crayon, et on obtient en sortie des données concernant l'objet à indexer.

Ces données associées à chacun de ces objets peuvent être par exemple :

- une dénomination
- les circonstances d'utilisation
- le rôle de l'objet au quotidien
- le genre et le nombre de l'objet
- les particularités physiques, ou plus précisément la dénomination de sous-espèces avec leurs particularités morphologiques,
- les adjectifs qualifiant le plus souvent ce substantif,
- une description du type adapté à un dictionnaire
- les connotations (interprétations subjectives).

Le vade-mecum 12 est exploité par le module de perception qui sera décrit plus loin pour reconnaître les constituants de l'image à indexer via des caractéristiques mathématiques définies précédemment (les signatures). A titre d'exemple, la description du mot *"pomme"* peut se présenter sous la forme suivante :

**Nom :** Pomme
**Genre :** Féminin
**Nombre :** Singulier
**Contexte d'utilisation :**
**Rôle:**
**Remarque :**
**Particularités physiques :**

- golden → pomme à manger au couteau, à peau jaune et chair juteuse
- granny-smith → pomme d'un vert éclatant à chair ferme et acidulée
- reinette du Canada → pomme grosse et verte
- reinette grise → pomme grosse et verte
- reinette du Mans → pomme juteuse de couleur jaune
- reinette des reinettes → pomme à peau jaune et rouge.

**Adjectif:** vert, blet, mûr, passerillé, sec, fruité, cotonneux, fondant, juteux, pulpeux
**Description :** fruit du pommier, rond à pulpe ferme et juteuse, à cinq loges cartilagineuses contenant des pépins
**Description picturale :** pointeur vers le vecteur.

Un exemple d'algorithme de construction du vade-mecum 12 est représenté sur la Figure 4.
Selon une première étape 121, on procède à un affichage de l'image à l'écran afin de pouvoir choisir la catégorie de l'objet à l'aide d'un test 121A.
Si le test 121A révèle que la catégorie existe, on passe à l'étape 122 d'affichage de tous les objets de cette catégorie afin de choisir un objet similaire à l'aide d'un test 122A.
Si le test 122A révèle que le nom de l'objet existe, on passe à l'étape 123 d'affichage des informations particulières que l'utilisateur peut préciser et valider pour cet objet en particulier, puis on passe à l'étape 126 de remplissage d'un document de description qui peut être sous la forme d'un fichier de sortie.
Si le test 122A révèle que le nom de l'objet n'existe pas, on passe à l'étape 124 d'affichage d'une interface permettant à l'utilisateur de spécifier précisément l'objet, avec des informations particulières à cet objet par rapport à la catégorie, puis on passe à l'étape 123.
Après l'étape 121, si le test 121A révèle que la catégorie n'existe pas, on passe à l'étape 125 d'affichage d'une interface permettant à l'utilisateur de remplir les champs tels que le rôle, le nom, le contexte pour définir le plus précisément possible l'objet, et on passe ensuite à l'étape 124.
La boucle de la Figure 4 est répétée tant qu'il existe des objets à insérer dans le vade-mecum.
La base de données texte est ensuite mise à jour.
Les images qui viennent d'être insérées dans le vade-mecum 12 sont indexées de façon picturale, par exemple suivant le format défini dans les demandes de brevet français 2 753 820 et 2 779 848.

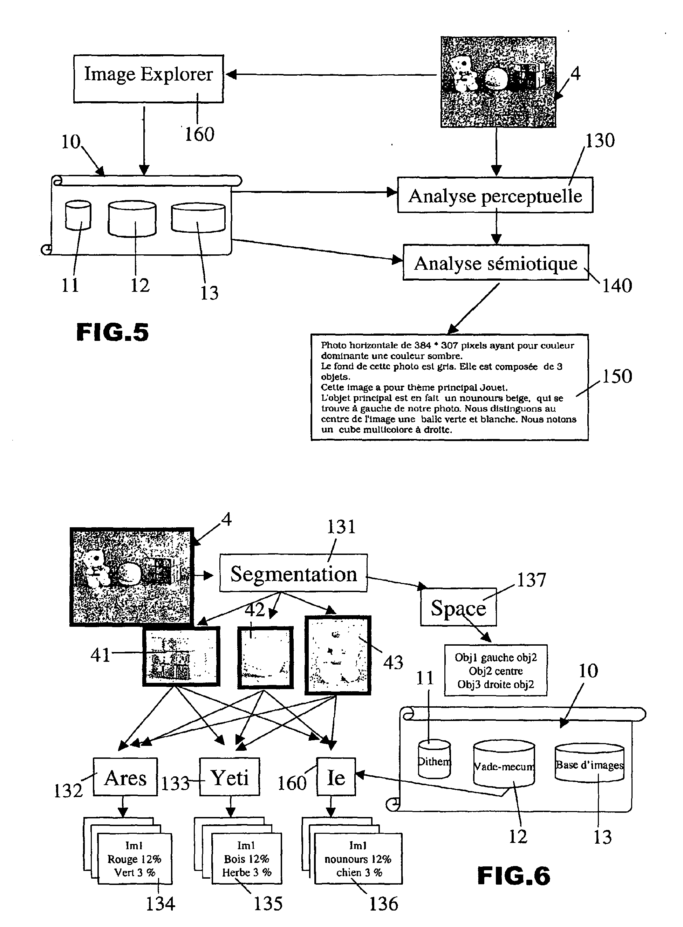

La Figure 5 montre l'architecture générale du processus d'indexation d'images mis en oeuvre lors de la construction de la base d'images 13 de la base de connaissances 10.
A partir d'une image de base telle que l'image de démonstration 4, le processus d'indexation d'une image comprend essentiellement une analyse perceptuelle (module 130) qui a pour but de décrire le contenu perceptuel de l'image et une analyse sémiotique (module 140) qui fournit l'ensemble des informations nécessaires pour effectuer une auto-indexation sans intervention humaine et fournir en sortie une carte d'identification 150 dont les données textuelles sont intégrées automatiquement dans la base de connaissances 10 tandis que les données picturales sont également fournies à la base de connaissances par l'intermédiaire du module 160 de reconnaissance d'objet.

L'analyse perceptuelle 130 consiste en une description visuelle de l'image qui est effectuée tant d'un point de vue global qui permet de décrire l'image dans son intégralité (couleur dominante, emplacement des différents objets,...) que d'un point de vue local qui permet de décrire chacun des constituants de l'image de façon précise.

L'analyse perceptuelle implique la mise en oeuvre de diverses méthodes.

Ainsi, un module 131 permet de segmenter l'image en composants homogènes 41, 42, 43 afin de faciliter le calcul ultérieur des caractéristiques.

D'autres modules 132, 133, 160, 137 sont utilisés pour extraire et caractériser les propriétés invariantes de l'image et de ses constituants.

Le module 132 permet ainsi de caractériser la ou les couleurs et le module 133 permet de caractériser la ou les textures présentes dans l'image et dans ses constituants 41, 42, 43.

Le module 137 permet de localiser les différents objets dans l'image générale.

Le module 160 permet de détecter les points d'intérêt puis effectue une triangulation pour extraire des mailles sur lesquelles vont être calculées des caractéristiques locales robustes aux transformations courantes de prise de vue (moment de Zernike). Le module 160 peut en particulier mettre en oeuvre les procédés décrits dans les documents FR 2 753 820 et FR 2 779 848.

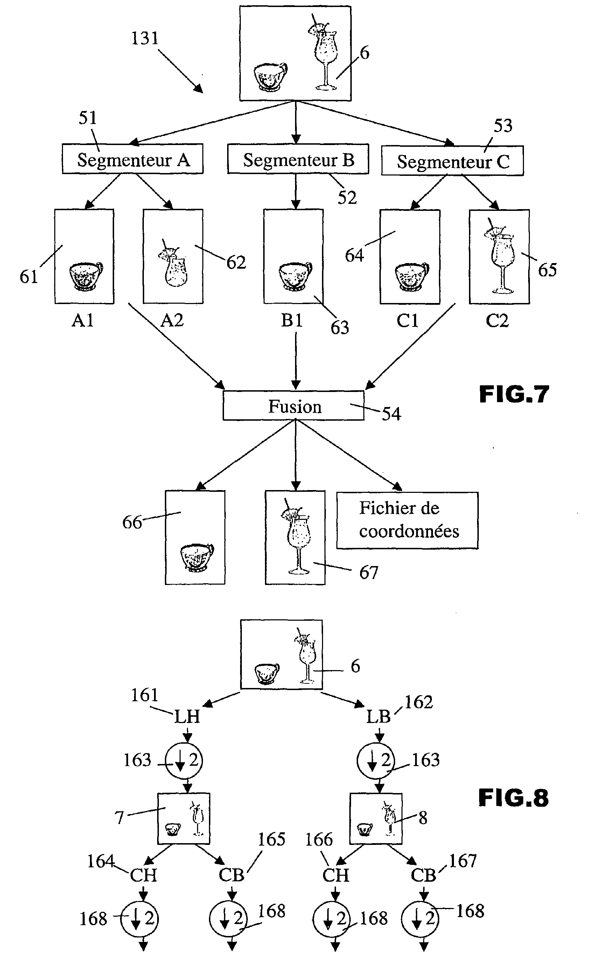

On décrira maintenant en référence aux Figures 7 à 9 un exemple de module 131 de segmentation.

La Figure 7 montre un exemple de module de segmentation 131 mettant en oeuvre plusieurs méthodes de segmentation basées sur des critères différents (chromatique, texture,...) afin d'augmenter de façon significative la robustesse et élargir le spectre d'images correctement traitées.

Un premier sous-module de segmentation 51 porte sur les textures (étude et caractérisation de la distribution spatiale et fréquentielle des niveaux de gris d'une image). Une image 6 est découpée en plusieurs régions 61, 62 où chacune possède une apparence homogène et ayant des propriétés statistiques et visuelles différentes. Une méthode donnant de bons résultats est basée sur des filtrages spatio-fréquentiels de l'image. L'image brute est décomposée en plusieurs bandes de fréquences et l'on utilise une décomposition multi-échelle obtenue par l'application d'une ondelette ayant comme caractéristiques une bonne localisation aussi bien dans le domaine fréquentiel que dans le domaine spatial.

Un deuxième sous-module de segmentation 52 est basé sur l'analyse chromatique et achromatique et permet d'identifier une région 63 où un objet est isolé du contexte.

Un troisième sous-module de segmentation 53 est basé sur la détection de contours avec un filtre optimal et permet d'identifier des régions 64, 65 identifiant chacune un objet.

Un module de fusion 54 permet d'augmenter la robustesse et la performance de la segmentation. La fusion consiste à mettre en commun les résultats des sous-modules de segmentation 51 à 53. Le module de fusion 54 sélectionne le ou les objets, dans leur totalité ou en partie, mis en évidence par la majorité des sous-modules de segmentation 51 à 53.

Sur la Figure 7, l'objet 66 sélectionné correspond aux objets 61, 63 et 64 sélectionnés par les trois sous-modules 51 à 53 tandis que l'objet 67 sélectionné correspond à l'objet 65 sélectionné totalement par le sous-module 53 et à l'objet 62 sélectionné en partie par le sous-module 51.

Le sous-module de segmentation 51 assure la détection des caractéristiques de texture via un filtrage équivalent à un banc de filtres passe-haut et passe-bas à partir de l'image couleur 6 que l'on cherche à segmenter. Le sous-module 51 délivre en sortie des imagettes segmentées 61, 62 des objets ($A_i$) et un fichier de coordonnées des boîtes englobantes des objets.

La transformée en ondelettes permet d'obtenir des informations uniques relativement au domaine fréquentiel de l'image. La transformée en ondelettes permet une bonne localisation dans le domaine spatial et fréquentiel, en particulier dans le domaine des textures et s'avère plus performante que les méthodes utilisant les matrices de cooccurence ou la transformée de Fourier.

Une méthode optimisée assurant l'extraction et la caractérisation des constituants des images présente les caractéristiques suivantes :

Une transformée en ondelettes est de préférence de type récursive et présente des filtres passe-bas et passe-haut de préférence de taille 5, bien que des tailles voisines, par exemple de 4 ou 6, puissent également être envisagées.

Un filtre linéaire passe-bas de taille 5 est caractérisé par des indices $a_0$ et $a_5$ et $b_1$ à $b_4$ de la façon suivante :

$$y(i) = a_5 * x(i-5) + a_4 * x(i-4) + a_3 * x(i-3) + a_2 * x(i-2) + a_1 * x(i-1) + a_0 * x(i)$$
$$+ b_4 * y(i-4) + b_3 * y(i-3) + b_2 * y(i-2) + b_1 * y(i-1).$$

Un filtre linéaire passe-haut de taille 5 est pour sa part caractérisé par des indices $c_0$ à $c_5$ et $d_1$ à $d_4$ de la façon suivante :

$$y(i) = c_5 * x(i-5) + c_4 * x(i-4) + c_3 * x(i-3) + c_2 * x(i-2) + c_1 * x(i-1) + c_0 * x(i)$$

$$+ d_4 * y(i-4) + d_3 * y(i-3) + d_2 * y(i-2) + d_1 * y(i-1).$$

De bons résultats sont obtenus en choisissant par exemple $a_0 = 0,5$, $b_1 = 0,5$, $c_0 = 0,5$, $d_1 = -0,5$ et tous les autres coefficients à zéro.

Le résultat de cette décomposition par les filtres passe-bas et passe-haut est une matrice 3D d'attributs, chaque élément (i,j) de la matrice étant un vecteur caractérisant la distribution des valeurs des pixels au voisinage du point (i,j).

Afin de réduire le temps de calcul, une étape de décimation paramétrée, c'est-à-dire une division par $2^n$ du nombre d'images obtenues, peut être effectuée après chaque opération de filtrage dans le cas d'images de grande résolution ou de grande taille, de manière à diminuer le nombre de données à traiter. Le nombre entier $\underline{n}$ est d'autant plus grand que la résolution est importante.

Le processus de transformation en ondelettes avec filtre passe-bas et filtre passe-haut est opéré d'une part sur des lignes puis sur des colonnes de l'image.

Le processus de transformation peut être réitéré plusieurs fois sur $\underline{n}$ étages, par exemple deux ou trois étages.

Après une phase de lissage, on peut réduire en profondeur la taille de la matrice d'attributs en ne retenant que le nombre d'images [2n+(n-1)] contenant le plus de détails, $\underline{n}$ étant le nombre d'étages.

Lors de la réduction du nombre d'images (par exemple pour ne garder que huit images sur soixante-quatre images dans le cas où n = 3), on peut conserver une première image résultant de l'application du filtre passe-bas dans les deux directions, éliminer une image résultant de l'application du filtre passe-haut dans les deux directions, et procéder à des comparaisons successives sur les images restantes en opérant le cas échéant des fusions pour obtenir les autres (2n + n - 2) images à retenir.

On peut également utiliser une méthode basée sur une analyse en composantes principales de la matrice d'attributs.

Pour réduire la fluctuation entre des vecteurs d'attributs des pixels de la même texture, on effectue un processus de recherche de la meilleure partition, au sens d'un critère donné, par exemple la maximisation de l'énergie, de la matrice d'attributs aboutissant à une image de régions où les pixels d'une même région ayant des attributs similaires ont une même étiquette. Pour ce faire, on peut utiliser un algorithme de c-means. Cette technique, connue aussi sous le nom de "clustering" consiste à regrouper dans des classes identiques les pixels ou des groupes de pixels dont les caractéristiques tendent à former des grappes dans l'espace des paramètres.

Le résultat de cette répartition est une image labellisée où les pixels d'une même zone homogène ont la même étiquette.

Cette image est traitée pour identifier les objets et leur boîte englobante.

Ceci s'effectue en deux étapes :

- agglutination des pixels connexes ayant le même label, génération de l'enveloppe englobante,
- fusion des régions, par exemple en fusionnant les petits objets qui sont compris dans de plus gros.

La Figure 8 montre un schéma illustrant la transformée en ondelettes mise en oeuvre dans le sous-module 51.

Sur la Figure 8, on voit à titre d'exemple l'image 6 sur laquelle on effectue d'abord sur les lignes un filtrage passe-haut 161 et un filtrage passe-bas 162 qui sont suivis d'une étape 163 de division par 2 du nombre d'images pour obtenir des images 7, 8 respectivement, sur chacune desquelles on effectue sur les colonnes un filtrage passe-haut 164, respectivement 166, et un filtrage passe-bas 165, respectivement 167, qui sont de nouveau suivis d'une étape 168 de division par 2 du nombre d'images pour obtenir dans ce cas quatre images.

Le sous-module de segmentation 52 assure une détection chromatique et achromatique à partir de l'image couleur d'origine 6 que l'on cherche à segmenter. Le sous-ensemble 52 délivre en sortie des imagettes segmentées 63 des objets ($B_i$) et un fichier de coordonnées des boîtes englobantes des objets.

L'extraction des objets se fait en plusieurs étapes séquentielles :

- Conversion de l'image vers le modèle HSV ("Hue-Saturation-Value", c'est-à-dire Teinte-Saturation-Valeur)
- Propagation achromatique pour éliminer l'arrière-plan
- A la première itération on effectue une ouverture (afin d'éliminer le bruit et de reconnecter les régions), dans le cas d'une non-convergence en fin de cette première itération, on utilise une fermeture pour la seconde itération.

- Lancement d'un algorithme de labellisation
- Création des boîtes englobantes pour chaque objet trouvé.

Le sous-module de segmentation 53 assure la détection des contours par implémentation d'un filtre optimal modifié à partir de l'image couleur d'origine C que l'on cherche à segmenter. Le sous-module 53 délivre en sortie des imagettes segmentées 64, 65 des objets ($C_i$) et un fichier de coordonnées des boîtes englobantes des objets.
L'extraction des objets se fait en plusieurs étapes séquentielles :

- Conversion de l'image dans l'espace RGB (Rouge-vert-bleu) en un seul plan de luminance
- Utilisation d'un moyenneur afin d'éliminer le bruit lié à l'acquisition
- Calcul des gradients horizontaux et des gradients verticaux
- Sommation des deux images des gradients afin d'obtenir une seule image
- Calcul du minimum et du maximum de cette image afin de déterminer les valeurs haut et bas nécessaires au seuillage par hystérésis.

Ce qui consiste à fixer à 0 toutes les valeurs de l'image inférieure au seuil bas, à mettre toutes les valeurs de l'image supérieure au seuil haut à 1. Pour les valeurs de l'image comprises entre le seuil bas et le seuil haut, la décision de fixer à 0 ou à 1 dépend de la connexité du pixel avec ses voisins binaires.

- Réalisation d'une ouverture morphologique
- Réalisation de multiples fermetures morphologiques
- Lancement d'un algorithme de labellisation
- Création des boîtes englobantes pour chaque objet trouvé.

A partir des boîtes englobantes mises en évidence par les sous-modules de segmentation ou segmenteurs 51, 52, 53, on procède dans le module 54 de la Figure 7 à la fusion des segmentations.
Les objets envoyés par chacun des trois segmenteurs 51, 52, 53 sont classés dans une liste en fonction de leur taille par ordre décroissant. Pour chaque objet non traité de la liste, on calcule son intersection avec les autres objets non traités de taille inférieure. Les objets ayant une grande intersection sont déclarés comme étant un objet sélectionné.
Si cet algorithme est appliqué à l'exemple de la Figure 7, on obtient :

- Ordonner par ordre décroissant de superficie les n objets des segmenteurs afin d'obtenir une liste. Pour cet exemple L = (A1, B1, C1, C2, A2), où A1, A2, B1, C1, C2 représentent les imagettes segmentées 61 à 65,
- Tant qu'il y a des objets non visités dans la liste :

  • Prendre le premier élément libre de la liste, regarder s'il y a une intersection entre cet élément et les suivants libres de cette liste.
  • S'il y a une intersection entre objets de segmenteurs différents, construire le graphe et marquer ces items comme étant traités c'est-à-dire non libres.
  • Sur l'exemple de la Figure 7, on obtient deux graphes :

      G1 : A1 - B1 - C1
      G2 : C2 - A2

- Faire la même chose en inversant la liste de façon à éliminer les éléments vides. On obtient ici aussi deux graphes :

      G1 : A2 - C2
      G2 : C1 - B1 - A1

- Mettre en commun ces résultats de façon à obtenir des résultats fiables : les graphes obtenus ont un résultat plus fiable puisqu'ils regroupent les choses vraisemblables précédentes.

Grâce à cette méthode, il est possible de travailler avec un nombre variable de segmenteurs.

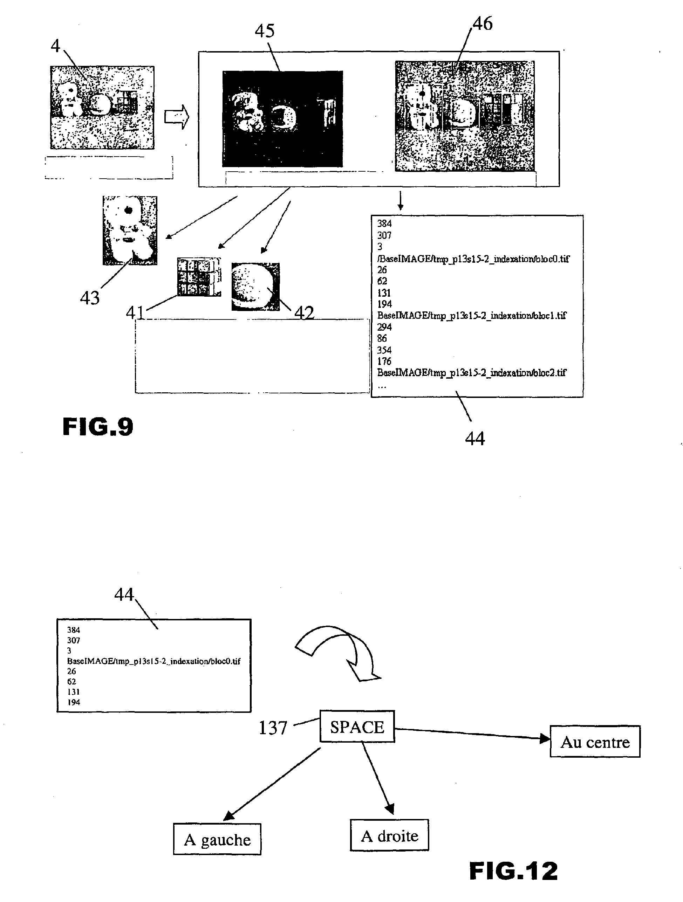

La Figure 9 montre ce qui peut être obtenu à la sortie du module de fusion des segmentations avec l'exemple de l'image de démonstration 4 de la Figure 1.
Les objets segmentés portent les références 41, 42, 43 et le fichier de coordonnées des boîtes englobantes des objets porte la référence 44.

Les références 45, 46 montrent le résultat d'étapes intermédiaires de segmentation et de fusion.

Comme on l'a vu sur la Figure 6, les objets segmentés sont soumis de façon locale à un ensemble de divers traitements dans des modules 132, 133, 160, 137 faisant partie de la fonction 130 d'analyse perceptuelle. Ces divers traitements peuvent par ailleurs être appliqués à l'analyse globale de l'image. Toutefois, par mesure de simplification, ces traitements ne seront décrits qu'en référence à un traitement local sur les objets segmentés 41, 42, 43.

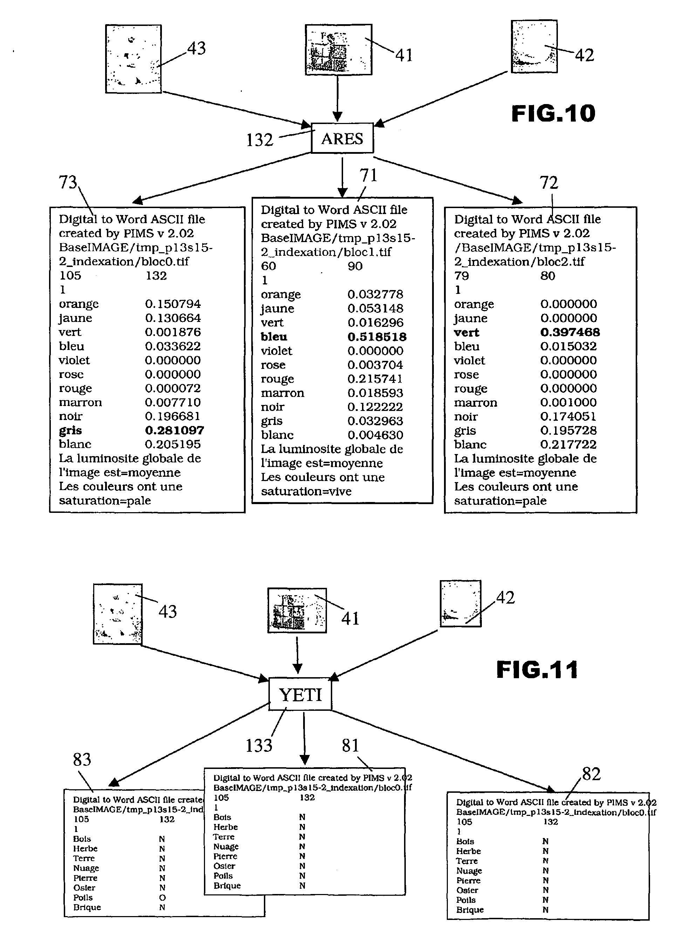

Le module 132 dénommé ARES illustré sur la Figure 10 exploite les propriétés inhérentes à la couleur et effectue une analyse et une recherche d'images similaires par histogramme.

L'algorithme mis en oeuvre dans le module 132 a pour but de trouver la distribution des couleurs constituant l'image d'entrée et il permet en outre de générer les termes de langue naturelle correspondants.

Les informations fournies à l'entrée du module 132 comprennent une image d'entrée en couleurs 41, 42, 43, des boîtes rectangulaires des objets, les masques binaires des objets et la définition d'un découpage chromatique avec des histogrammes HSV pour chacune des couleurs identifiées dans un dictionnaire chromatique.

Le module 132 fournit en sortie un fichier texte 71, 72, 73 contenant les mots décrivant les teintes de base avec les valeurs numériques représentant le pourcentage de présence de la teinte dans l'image.

Les opérations séquentielles effectuées par le module 132 sont les suivantes :

- Lecture du fichier contenant l'image d'entrée
- Lecture des informations décrivant l'objet :

  • le fichier texte des boîtes rectangulaires des objets produit par le segmenteur
  • le fichier des masques binaires codant la forme de l'objet.

- Lecture du fichier texte de découpage du spectre chromatique constituant un dictionnaire chromatique
- Isolation des objets de l'image d'entrée à l'aide des valeurs définissant la boîte englobante et le masque binaire
- Pour chaque objet, caractérisation de la couleur :

  • Conversion de l'objet dans l'espace de couleurs HSV
  • Calcul de l'histogramme de l'objet : appariement de cet histogramme avec le dictionnaire chromatique

    o Normalisation de l'image pour avoir un histogramme indépendant des conditions de prise de vue : Invariance d'échelle. Un traitement d'invariance d'échelle consiste à normaliser les tailles différentes des images de sorte que l'histogramme final soit identique quelle que soit la surface d'origine des images.
    o Pour chaque plage de l'histogramme, production d'une caractérisation textuelle des couleurs et d'une description de la luminance et de la saturation globale de l'objet.

- Sauvegarde des résultats pour chaque objet.

Les fichiers 71, 72, 73 de la Figure 10 donnent des exemples de résultats pour les images des objets segmentés 41, 42, 43.

Le module 133 dénommé YETI illustré sur la Figure 11 exploite les caractéristiques de la texture des images et met en oeuvre une transformée en ondelettes.

L'algorithme mis en oeuvre dans le module 133 a pour but de trouver la distribution des textures constituant l'image d'entrée et il permet en outre de générer les termes de langue naturelle correspondants.

Les informations fournies à l'entrée du module 133 comprennent une imagette de l'objet 41, 42, 43, un dictionnaire des textures indexées et le nombre d'étages du filtre en ondelettes.

Le module 133 fournit en sortie un fichier texte 81, 82, 83 indiquant la liste des textures présentes ou absentes dans l'image d'entrée.

Le module 133 effectue essentiellement une analyse fréquentielle et spatiale à différentes échelles. Les critères visuels qui ont été retenus pour la texture sont le contraste, la granularité, l'orientation, la forme, la finesse, la régularité et la rugosité.

La méthode mise en oeuvre pour l'extraction, l'identification et la caractérisation des constituants des images se base sur une transformée en ondelettes, c'est-à-dire un filtrage spatio-fréquentiel effectué sur les imagettes segmentées décomposées en plusieurs bandes de fréquence. La décomposition multi-échelle employée est obtenue par l'application d'une ondelette ayant comme caractéristique une localisation de bonne qualité dans le domaine spatial et fréquentiel. Le résultat de cette décomposition est une matrice d'attributs où après une phase de lissage, pour réduire la fluctuation entre les vecteurs d'attributs statistique d'ordre 1, des pixels de la même texture, un processus de recherche de la meilleure partition, au sens d'un critère donné, par exemple la maximisation de l'énergie, de la matrice d'attributs. Une des techniques possibles est basée sur l'algorithme kmeans.

Des relations bijectives entre la langue et les modèles de texture ont été établies au sein d'un dictionnaire de textures servant de référence.

Les opérations séquentielles effectuées par le module 133 sont les suivantes :

- Lecture de l'image
- Utilisation de la transformée en ondelettes (en fonction du nombre d'étages placé en entrée), afin d'obtenir $4^n$ images filtrées
- Réduction du nombre d'images filtrées à 2n+(n-1) images
- Classification des pixels par rapport aux plus proches voisins similaires. Algorithme des kmeans
- Création du vecteur de caractéristiques puis comparaison avec les vecteurs caractéristiques des textures du dictionnaire
- Calcul de la distance Reimannienne entre les vecteurs
- Sauvegarde de la liste des textures produites présentes ou absentes dans l'image d'entrée.

Les fichiers 81, 82, 83 de la Figure 11 donnent des exemples de résultats pour les images des objets segmentés 41, 42, 43.

Le module 137 dénommé SPACE illustré sur la Figure 12 assure la localisation des différents éléments dans l'image et détermine les emplacements géométriques des objets les uns par rapport aux autres, pour les exprimer grâce aux prépositions locatives en langage naturel.

Le module 137 reçoit en entrée le fichier 44 de coordonnées des boites englobantes des objets et fournit en sortie un fichier relatant les relations spatiales, en langage naturel, des différents objets.

Plusieurs niveaux de représentation des relations spatiales entre les objets d'une image peuvent être définis pour décrire la sémantique de l'image et générer la description textuelle des images.

Par exemple :

- lorsque la relation spatiale désigne une famille de relations, elle est dite de premier niveau et on trouve dans cette catégorie les relations suivantes : *dans, sur, à,* etc.,
- lorsque la relation spatiale est une relation particulière, elle est appelée relation à deux niveaux. Dans ce cas, le deuxième niveau sert à préciser le sens (la direction) de la relation décrite par le premier niveau, par exemple les expressions *haut* et *bas* sont des relations à deux niveaux.

La description textuelle des images peut en outre comprendre des aspects géométriques tels que la forme ou la taille des différents objets et les relations afférentes (par exemple rond, rectangulaire, fin, long, plus petit, plus grand, ...).

Le module 137 peut ainsi mettre en oeuvre de façon séquentielle les étapes suivantes :

- Lecture du fichier de coordonnées
- Recherche de la boîte englobante ayant la plus grande superficie qui devient alors l'objet principal (Exemple Obj1)
- Pour cet objet principal, on cherche sa localisation dans la photo. Pour cela, il suffit de faire une comparaison entre les coordonnées de sa boîte englobante avec les règles de placement qui ont été prédéfinies. Pour un exemple à quatre objets Obj1 à Obj4, on peut ainsi avoir :

  o Obj 1 est au centre de l'image.

- Puis on prend chacun des autres objets et on cherche à les placer par rapport à l'objet principal grâce à de nouvelles règles de placement. Ce qui donne dans le même exemple :

  o Obj2 à gauche Obj1
  o Obj3 à droite Obj1
  o Obj4 à gauche Obj1.

- On recherche ensuite les transitivités possibles entre les objets. On obtient alors :

  o Obj4 à gauche Obj2.

- Génération du fichier de sortie décrivant les relations spatiales entre les constituants de l'image.

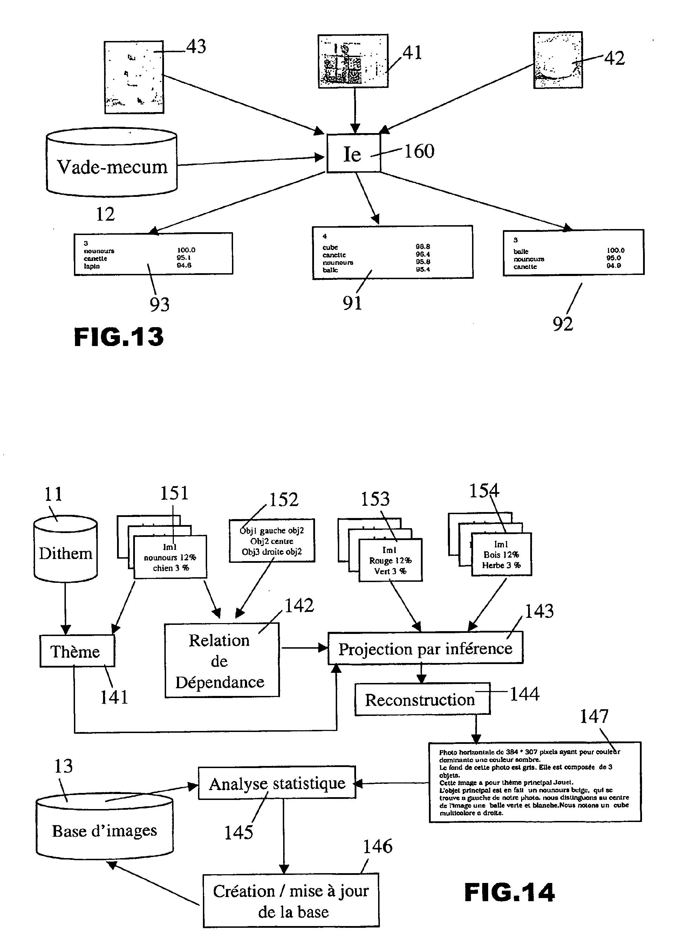

Le module 160 dénommé Ie ("Image explorer") illustré sur la Figure 13 assure la reconnaissance d'objets. Ce module permet ainsi, pour chacun des objets mis en avant par le module de segmentation 131, de le reconnaître afin de pouvoir le nommer.

Le module 160 reçoit en entier, pour chaque objet, un fichier imagette de l'objet 41, 42, 43 et coopère avec le vade-mecum 12.

Le module 160 délivre en sortie pour chaque objet 41, 42, 43 une liste 91, 92, 93 de concepts qui ont été reconnus comme candidats suite à des comparaisons avec la base de données vade-mecum 2, ces concepts étant associés à un taux de pertinence.

Pour extraire et caractériser les propriétés invariantes de l'image et de ses constituants, il est fait appel notamment au procédé décrit dans les documents FR 2 753 820 et FR 2 779 868, pour détecter ces points d'intérêt, puis effectuer une triangulation permettant d'extraire des mailles sur lesquelles sont calculées des caractéristiques locales robustes aux transformations courantes de prise de vue (moments de Zernike).

La base de recherche est constituée par le vade-mecum 12 préalablement indexé de façon picturale.

La base de données vade-mecum est ainsi interrogée avec comme question l'objet que l'on cherche à nommer.

Le module 160 produit une liste 91, 92, 93 de concepts en concordance avec l'image, avec le taux de pertinence, à partir des traits mathématiques en commun entre l'image à reconnaître et les objets de la base de données vade-mecum 12.

Une fois effectuée l'analyse perceptuelle 130 de la Figure 5, et après avoir identifié les différents constituants de l'image à analyser, une étape 140 d'analyse sémiotique est nécessaire. Cette étape consiste à déterminer les relations de haut niveau existant entre les différents composants mis en évidence préalablement, et à arranger de façon particulière les différentes signatures mises en évidence précédemment. Cette étape assure une description la plus précise possible de l'image considérée de façon à pouvoir faire une recherche la plus large possible et également à pouvoir adapter le texte produit en fonction du profil de l'utilisateur.

L'analyse sémiotique illustrée sur la Figure 14 utilise le dictionnaire de thèmes 11, les fichiers 151 de sortie du module 137 de localisation des différents éléments dans l'image, les fichiers 153 de sortie du module 132 d'exploitation des propriétés inhérentes à la couleur et les fichiers 154 de sortie du module 133 d'exploitation des caractéristiques de la texture des images.

L'analyse sémiotique comprend différentes étapes illustrées sur la Figure 14, à savoir une étape 141 de recherche du thème de l'image à indexer, une étape 142 de fabrication de relation de dépendance entre les objets présents dans l'image, une étape 143 de projection par inférence, une étape 144 de reconstruction et génération d'un texte 147, une étape 145 d'analyse statistique appliquée au texte 147 produit et une étape 146 de création ou mise à jour de la base de données images 13.

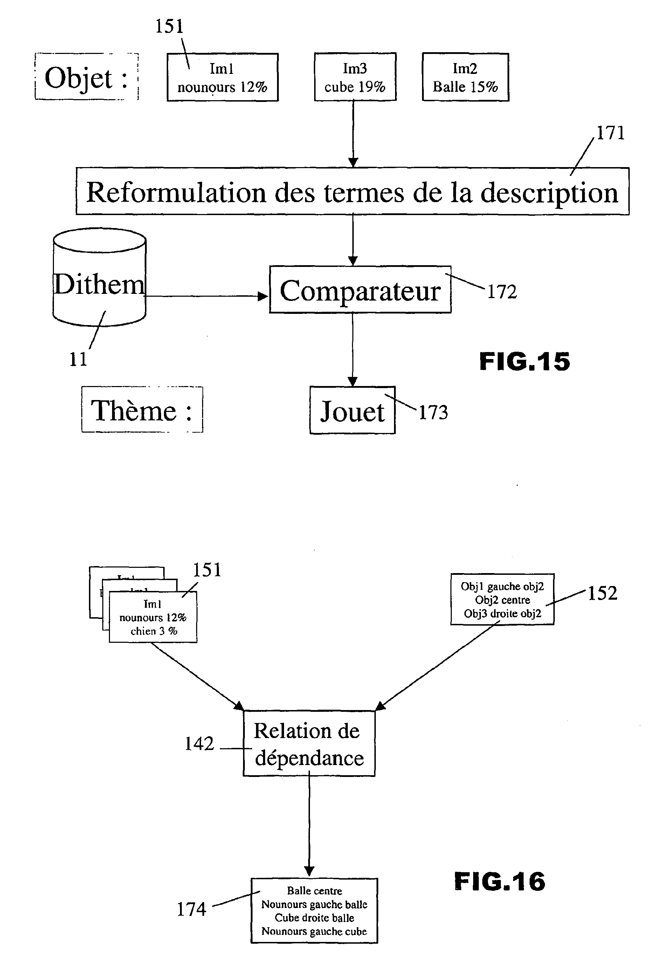

Les différentes étapes précitées 141 à 146 de l'analyse sémiotique seront maintenant décrites plus en détail en référence aux Figures 15 à 19.

L'étape 141 illustrée sur la Figure 15 consiste à déterminer si un thème général peut ressortir de l'image à analyser.

La recherche du thème de l'image à analyser, à partir d'un fichier 151 de sortie du module de reconnaissance d'objets 160 comprend une première étape 171 de reformulation des termes de la description de l'image et une seconde étape 172 de comparaison entre une description de l'image ou une question et la base de données 11 constituant un dictionnaire d'informations thématiques.

Le module 171 de reformulation a pour but de reformuler les termes mis en évidence par le module 160 de reconnaissance d'objets afin de trouver les synonymes. Ainsi, dans le cas de l'exemple illustré sur la Figure 15, le terme *"nounours"* qui est le mot associé à l'objet 1 pourra être reformulé en *"ours"*.

Le module de comparaison 172 permet d'effectuer une comparaison entre les termes de la description de l'image, constituée du nom de chacun des objets et des reformulations possibles, et les documents contenus dans le dictionnaire de thèmes 11.

En résumé, l'étape 141 de détermination de l'existence éventuelle d'un thème général auquel peut se rattacher l'image à examiner consiste d'abord pour chaque objet à lire dans le fichier de sortie du module de reconnaissance d'objets le nom de l'objet le plus vraisemblable et à constituer la question, par une concaténation des noms de différents objets identifiés dans l'image.

Pour chaque nom, il est alors mis en oeuvre l'étape 171 consistant à chercher à reformuler le nom et le résultat est concaténé avec la question.

Pour la question, il est fait appel à un comparateur 172 dont un exemple est explicité ci-dessous et qui utilise le dictionnaire de thèmes 11 comme base d'interrogation.

Le comparateur 172 reçoit en entrée une description de l'image ou une question et coopère avec le dictionnaire de thèmes 11 pour délivrer en sortie une liste des classes résultats.

Le fonctionnement du comparateur 172 est le suivant :

Pour effectuer la comparaison, on procède à un calcul de pertinence qui dépend :

- de la taille et de la qualité de l'intersection de la description de l'image et du document de référence de la base de données, c'est-à-dire de :

- la valeur informationnelle des mots de la description de l'image par rapport au contenu de la base de données 11,
- du nombre de mots de la description de l'image présents dans le document

- de la présence de liens grammaticaux entre les mots de la description de l'image trouvés dans le document.

Un mot sera considéré comme ayant une valeur informationnelle d'autant plus grande que ce mot est rare dans la base. Par exemple, dans une base documentaire sur l'énergie atomique, le terme *"nucléaire"* est bien peu discriminant puisqu'il est présent dans la majorité des documents de la base. Il aura donc un poids informationnel faible.

Par ailleurs, si deux mots de la description de l'image possèdent un lien grammatical dans la question, et notamment un lien interne à un groupe nominal, les thèmes stockés dans le dictionnaire de thèmes 11 contenant ces mots liés par une relation grammaticale seront considérés comme plus pertinents que les thèmes contenant ces mots mais non liés entre eux.

Par exemple, si la question est M1[M2M3]M4 où M2 et M3 sont grammaticalement liés entre eux :

- un thème contenant M1 et M3 aura pour poids P(M1) + P(M3), où P(x) désigne le poids informationnel du mot x
- un thème contenant M1, M2 et M3 aura pour poids:

$$P(M1) + P(M2) + P(M3)$$

- un thème contenant M1 et [M2 M3] aura pour poids :

$$P(M1) + 2*P(M2M3).$$

Par exemple, si sur une image on trouve comme objets un couteau, une fourchette, un verre et une assiette, il sera possible d'affirmer que l'image concernée a des relations conceptuelles avec le repas.

Dans l'exemple de la Figure 15, le résultat 173 de la recherche de thème se traduit par le terme *"jouet"*. Lorsqu'aucun thème n'a pu être mis en évidence, le résultat donné peut être simplement l'expression *"néant"* ou *"RAS"*.

Le processus de fabrication de relations de dépendance 142 à partir du fichier 151 de sortie du module 160 de reconnaissance d'objet et du fichier 152 de sortie du module 160 de localisation des différents éléments de l'image sera maintenant décrit en référence à la Figure 16.

Lors du processus de fabrication de relations de dépendances, on cherche à établir des relations spatiales de haut niveau entre les objets présents dans l'image.

On a déjà vu plus haut que dans le module de localisation spatiale 160 on a pu par exemple déjà définir que l'objet A est le plus gros de la photo, qu'il se situe à gauche de l'image,... Dans le module 142, on cherche à établir des relations plus subjectives, telles que :

- La transitivité : si A est à gauche de B, si B est à gauche de C, alors A est à gauche de C,
- La synonymie : si A est en haut de l'image, si B est en bas de l'image et si A et B ont des abscisses semblables, on doit pouvoir dire que A est au-dessus de B ou que B est en dessous de A.

Avec ce type de relations précises, la qualité des descriptions peut être grandement améliorée.

Les relations de dépendance qui ont ainsi pu être mises en évidence apparaissent dans le fichier de sortie 174 du module 142.

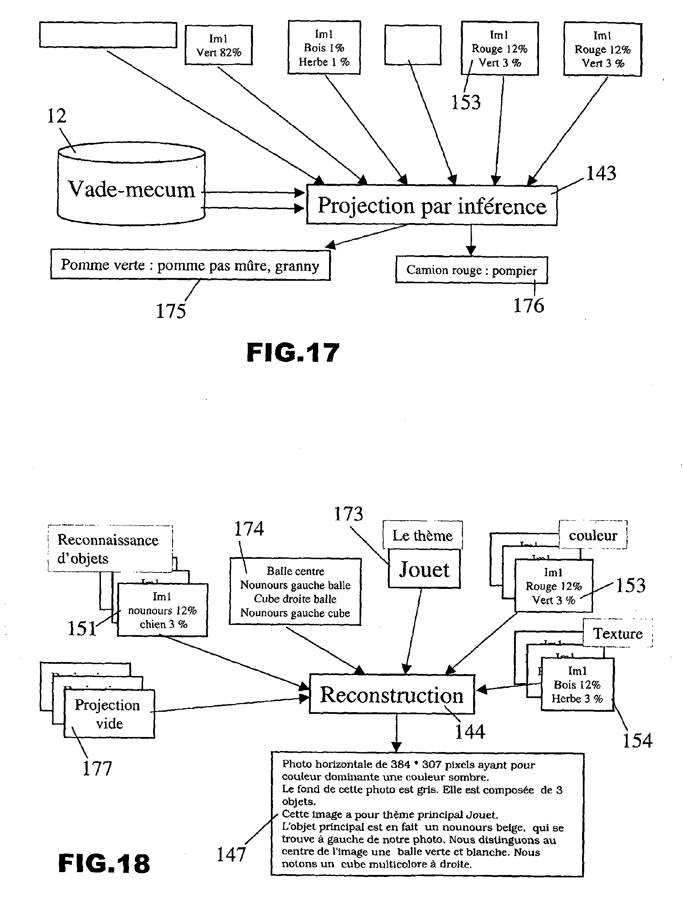

Le module de projection par inférence 143 qui utilise une base de connaissances comprenant le vade-mecum 12 sera décrit ci-dessous en référence à la Figure 17.

Le module 143 reçoit en entrées pour chacun des objets les résultats du module 142 de fabrication de relations de dépendance, les résultats du module 133 de recherche de la texture et les résultats du module 132 d'exploitation des propriétés inhérentes à la couleur.

Le module 147 élabore un fichier texte pour chacun des concepts qui ont pu être reformulés et enrichis.

Pour chaque objet, après lecture des fichiers contenant les résultats des modules 132, 133, 142 précités et lecture de l'entrée correspondant à l'objet en question du vade-mecum 12, il est effectué une comparaison des attributs lus dans le vade-mecum 12 avec ceux que l'on a obtenus par observation sur l'objet en question.

Si la comparaison révèle une correspondance, on génère une phrase faisant apparaître le concept identifié et on sauvegarde le résultat.

A titre d'exemple, la Figure 17 montre des résultats 175, 176 de concepts reformulés suite à l'étape 143 de projection par inférence.

Le résultat 175 fait apparaître que la définition de "l'objet" *"pomme verte"* pourrait être reformulée en *"pomme pas mûre"* ou *"granny"*, tandis que le résultat 176 fait apparaître que la définition de l'objet *"camion rouge"* pourrait être reformulée en *"pompier"*. Les concepts reformulés viennent s'ajouter aux descriptions des objets, en affinant celles-ci mais sans les remplacer.

La Figure 18 montre l'étape 144 de reconstruction ou de génération de texte qui fait partie de l'analyse sémiotique 140. Dans cette étape, à partir des fichiers 151, 152, 153 issus respectivement du module 160 de reconnaissance d'objets, du module 132 d'exploitation des propriétés inhérentes à la couleur, du module 133 d'exploitation des caractéristiques de la texture des images, ainsi que des fichiers 173, 174 issus respectivement du module 141 de recherche de thème et du module 142 de production de relations de dépendance, il est généré un texte 147 qui permettra l'indexation de l'image.

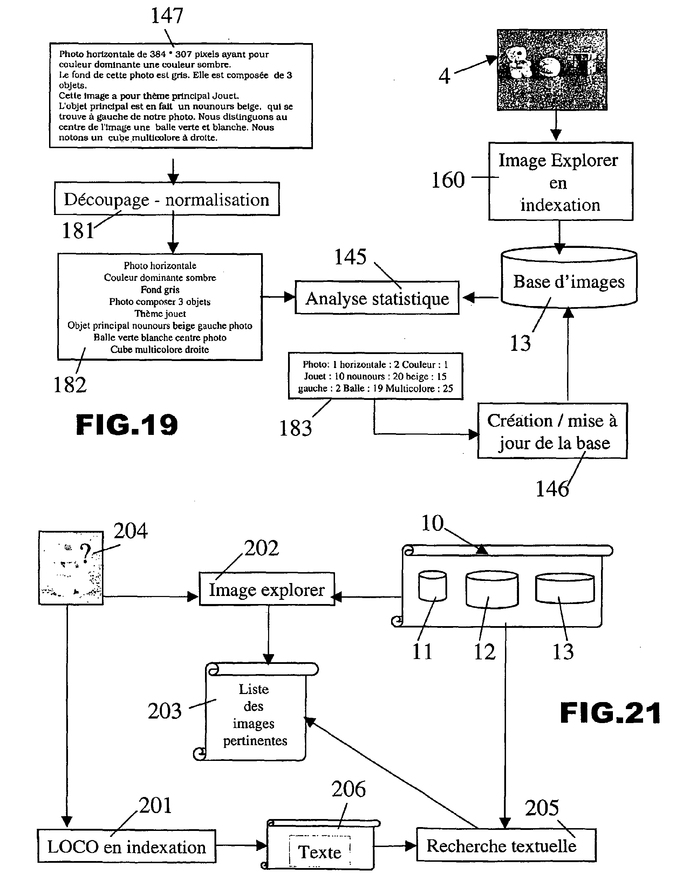

La Figure 19 montre l'étape 145 d'analyse statistique qui va permettre de terminer le processus d'indexation de l'image.

Une fois que les images ont été décrites de façon textuelle sous la forme de fichiers 147 à partir de leurs représentations symboliques, celles-ci sont indexées par l'intermédiaire d'un moteur de recherche textuelle. Pour ce faire, on utilise des techniques similaires à celles qui ont déjà été employées lors de l'indexation des thèmes notamment. Il est ainsi effectué une première étape 181 de découpage-normalisation analogue à l'étape 112 de la Figure 3 puis une analyse statistique analogue à l'étape 114 de la Figure 3, mais cette fois à partir des images déjà indexées, ou plus exactement de leurs textes d'indexation 182.

Le système d'indexation de la base textuelle attribue un poids sémantique à chaque mot simple ou composé, selon un modèle statistique élaboré à partir de l'ensemble des mots significatifs. Les poids ainsi calculés seront utilisés lors de l'interrogation, précisément par le module de comparaison question-documents. Son rôle est alors de calculer la proximité sémantique des documents de la base par rapport à la requête.

Puis l'analyse syntaxique attribuera à chaque mot du texte de description une catégorie grammaticale. En fonction de ces catégories, l'analyseur distingue les mots outils (vides) des mots significatifs (pleins). Seuls les mots significatifs sont retenus pour répondre aux besoins de la recherche documentaire. Par exemple, lors de l'analyse de la phrase *"dans la chambre, il y a un lit et une table"*, seuls les mots *"chambre"*, *"table"*, et *"lit"* sont considérés comme des mots significatifs, les autres mots sont considérés comme des mots vides.

Une fois que toutes les données de l'indexation textuelle sont disponibles dans un fichier 183, une procédure d'indexation picturale de l'image 4 peut être lancée par exemple suivant un module 160 de reconnaissance d'objet mettant en oeuvre le procédé décrit dans la demande de brevet FR 2 779 848.

Enfin, une étape 146 de création ou de mise à jour (remplissage des champs) de la base d'image 13 est effectuée. On peut par exemple utiliser le moteur de recherche textuelle multilingue, connu sous la dénomination SPIRIT, pour cette dernière partie du processus d'indexation.

Le programme d'indexation selon l'invention s'effectue de façon entièrement automatique.

A titre d'option, il est toutefois possible de prévoir l'affichage d'un écran de contrôle en fin de processus d'indexation d'une image pour permettre à un opérateur de voir le résultat d'un tel processus.

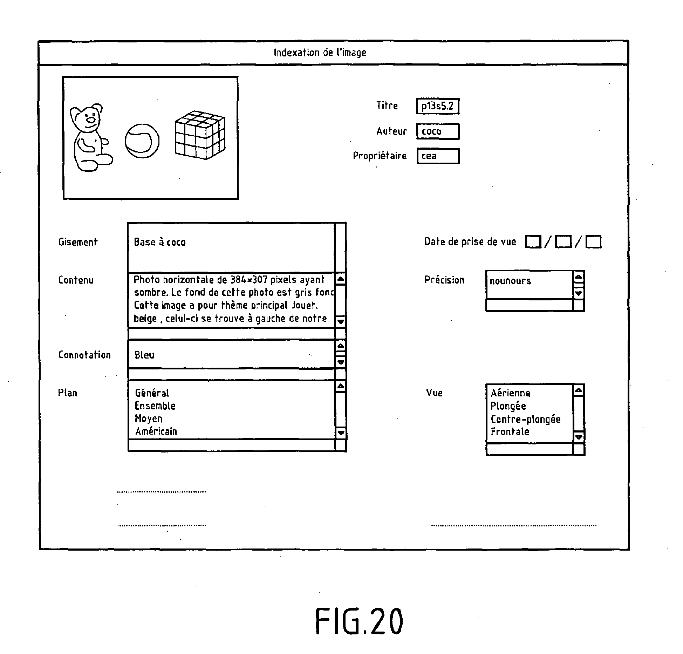

La Figure 20 montre un exemple possible d'écran affichant les informations relatives à la fin du processus d'indexation d'une image.

On décrira maintenant en référence aux Figures 21 à 27 un exemple de procédé de recherche d'image dans une base de connaissances 10 créée automatiquement conformément au procédé selon l'invention et comportant une base d'images 13 dans laquelle des objets, c'est-à-dire des constituants d'une image, ont été segmentés, localisés et stockés.

Lors de la phase de recherche, il s'agit de retrouver des images de base afin de répondre aux requêtes des utilisateurs. L'interrogation et la consultation s'effectuent de façon bi-modale sur le texte et l'image.

Si une question est posée en langue naturelle, éventuellement multilingue, elle est reformulée de façon à couvrir le spectre le plus large possible.

Le moteur de recherche textuelle permet alors de retrouver les images s'appariant avec les données de la base d'images 13.

Si une question est posée sous la forme d'une image, c'est-à-dire avec un fragment d'image ou une image similaire à celle qui est recherchée, on procède alors à une recherche picturale.

Les recherches textuelle et picturale peuvent naturellement être combinées entre elles.

La Figure 21 montre l'architecture générale d'un procédé de recherche picturale.

Un utilisateur peut rechercher des images similaires à une image-requête 204. Dans une étape 201, on cherche alors à extraire les caractéristiques de l'image-requête 204 suivant le même processus que celui décrit précédemment pour l'indexation d'une image.

On obtient ainsi un texte 206 de description d'une image qui constitue une signature de cette image. Dans une phase de recherche textuelle 205 en liaison avec la base de connaissances 10, une distance de similarité est calculée entre la signature-requête 206 et toutes les signatures de la base 10. Les réponses sont alors triées par ordre de similarité et on obtient une liste 203 des images pertinentes.

Un module 202 de reconnaissance d'objet est utilisé en liaison avec l'image-requête 204 et la base de connaissances 10.

La recherche picturale s'effectue avec les caractéristiques visuelles des images et les signatures de bas niveau (couleurs, formes).

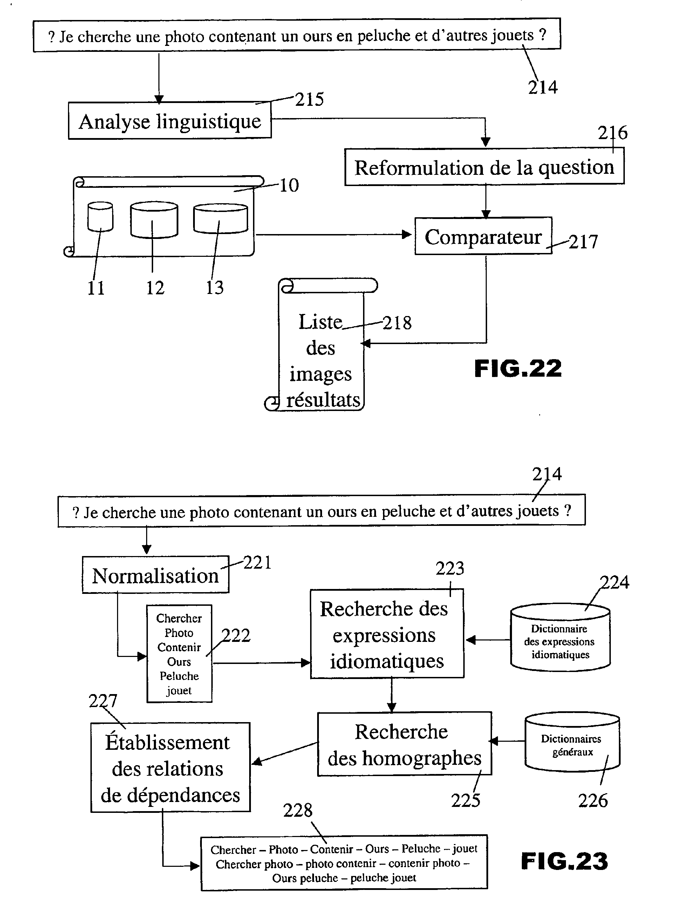

La Figure 22 montre l'architecture générale d'un procédé de recherche textuelle.

Dans ce type de recherche, l'utilisateur formule une question en langage naturel (étape 214). Par exemple, l'utilisateur peut formuler la question suivante : *"Je cherche une photo contenant un ours en peluche et d'autres jouets"*.

Cette question est récupérée puis traitée.

Le procédé de traitement d'une question comprend une étape 215 d'analyse linguistique, une étape 216 de reformulation de la question et une étape 217 de comparaison avec les documents de la base d'images 13.

On calcule le degré de proximité sémantique de la question avec toutes les descriptions textuelles des images de la base d'images 13. Ensuite, on ordonne les documents réponses suivant leur degré de proximité sémantique pour obtenir une liste 218 des images résultats.

Pour établir la similarité sémantique entre les mots significatifs de la requête et le contenu informationnel des documents de la base, on réalise un premier traitement destiné à l'indexation de la base textuelle par l'identification des mots significatifs et un deuxième traitement concernant l'analyse morpho-syntaxique de la requête.

La Figure 23 montre les différents modules mis en oeuvre lors de l'étape 215 d'analyse linguistique.

La phase de recherche textuelle s'appuie sur une étape d'analyse linguistique 215 similaire à celle qui a été effectuée lors de l'indexation des textes de description du dictionnaire de thèmes 11. Cette analyse linguistique permet donc de :

- reconnaître les différentes catégories de mots (pluriel/singulier, masculin/féminin, sigle,...)
- supprimer les ambiguïtés syntaxiques.

L'analyseur linguistique fournit deux structures de données : la première contient les mots de la question dans leur forme d'origine (tels qu'ils sont exprimés dans la question), la seconde contient les mots significatifs (pleins) en forme canonique. Les mots, les expressions idiomatiques (locutions) et les sigles sont considérés comme des mots clés.

L'intérêt de la première structure de données est de pouvoir lire les mots dans leur forme d'origine au cours de la visualisation des classes résultats. L'interrogateur peut ainsi retrouver les mots utilisés dans la question.

L'analyse linguistique comprend une étape de normalisation 221 dans laquelle le texte est découpé en unités connues qui constituent une liste 222. Après cela, à l'aide d'un dictionnaire 224 des expressions idiomatiques, on procède à l'étape 223 de recherche des expressions idiomatiques. Ensuite, à l'aide de dictionnaires généraux 226, on procède à l'étape 225 de recherche des homographes, puis, dans une étape 227, on procède à l'établissement de relations de dépendances. On obtient alors une liste 228 de mots ou expressions, après quoi on passe à l'étape 216 de reformulation de la question puis à l'étape de comparaison (Figure 22).

Le langage naturel étant très riche, il est clair qu'une même idée peut être exprimée avec des mots très différents. Pour remédier à ce problème, une étape de reformulation 216 est mise en place, afin d'étendre la question avec des termes équivalents.

Le rôle de la reformulation est d'améliorer les résultats de la recherche des documents pertinents en favorisant le rapprochement des concepts exprimés dans la requête avec ceux exprimés dans la base. L'action de la reformulation est ainsi destinée à la diminution des silences. Pour parvenir à cet objectif, il faut enrichir les concepts exprimés dans la requête.

La méthode adoptée consiste à utiliser un certain ensemble de règles de production décrivant des méthodes sémantiques. Plusieurs relations sémantiques sont prévues pour mieux conditionner ces règles. On peut trouver des règles comme des synonymes, les termes associés, les familles de mots, les termes spécifiques et les termes génériques. La partie gauche de la règle contient le mot de la requête, la partie droite contient les mots reformulés. Cependant, lorsqu'on utilise ce type de reformulation, le concept peut être trop élargi ou bien il peut être reformulé par un terme polysémique. Dans ce cas, le système sélectionnera au-delà des documents pertinents souhaités des documents non pertinents contenant les mots reformulés, d'où l'importance du choix des termes utilisés dans les règles de reformulation. La pertinence des réponses dépend de plusieurs facteurs, tels que par exemple le nombre de mots reformulés à partir d'un mot d'origine et la taille des documents de la base.

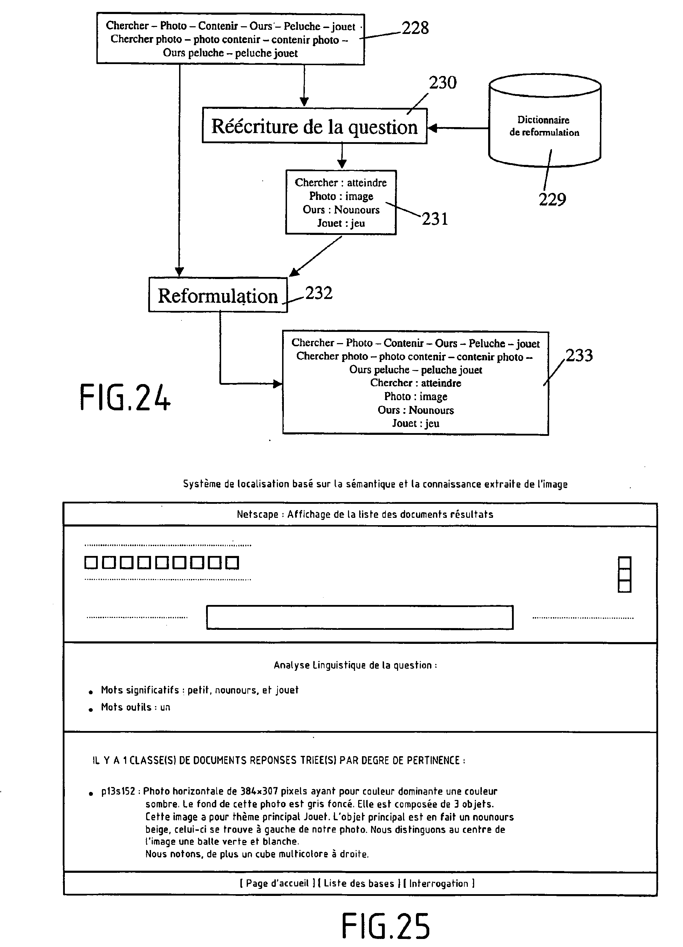

Si l'on considère la Figure 24, on voit que la liste 228 de mots ou expressions est d'abord soumise à une étape 230 de réécriture de la question en relation avec un dictionnaire de reformulation 229 comportant un ensemble de règles de production décrivant des relations sémantiques.

Il est à noter que le mot en entrée d'une règle de reformulation peut être uniterme ou multiterme. Par exemple, si le mot en entrée est "modèle à réseaux de neurones", le module de reformulation produit comme mot inféré "modèle connexionniste".

La liste 231 des relations sémantiques obtenues à l'étape de réécriture de la question est utilisée à l'étape 232 de reformulation proprement dite avec la liste initiale 228 pour produire en sortie une liste 233 reprenant la liste initiale 228 de mots ou expressions enrichie par la liste 231 des relations sémantiques.

Le comparateur 217 utilise toutes les informations résultant de l'analyse linguistique.

La première opération consiste à reprendre les mots simples en dépendance syntaxique et à constituer des mots composés. Cette opération servira à la recherche des mots de la question en dépendance syntaxique, qui sont stockés dans la liste inverse de la base de données textuelles. Le système attribue un poids sémantique aux mots en dépendance syntaxique dans la question comme aux mots simples. Ce poids sémantique est supérieur ou égal aux poids sémantiques des mots simples de la base. Cette étape est similaire à celle qui a été explicitée en référence au comparateur 172 de la Figure 15.

Vient ensuite une étape de calcul des poids des groupes simples et composés, puis le tri de ceux-ci en fonction de leur poids sémantique. L'étape qui suit consiste à rechercher pour le groupe les documents qui contiennent ces éléments. Il résulte de ce traitement un descripteur d'intersection par document. Le descripteur d'intersection des documents désigne les mots significatifs de la question qui sont présents dans le document. La taille de celui-ci correspond au nombre de groupes simples et composés qui sont issus de la requête.

Une fois que la liste des documents pertinents est établie, arrive l'étape de reconnaissance des documents ayant un descripteur d'intersection identique. Les documents qui auront le même descripteur d'intersection sont considérés dans la même classe de documents. Le poids attribué à une classe est la somme des poids des groupes simples et composés caractéristiques de la classe de documents et qui contribuent à la formation du description d'intersection des documents. Ainsi apparaîtra au début de la liste la classe la plus pertinente (ayant totalisé le poids de classe le plus important).

L'affectation des poids dans le système est fondée sur le principe suivant : plus les mots se trouvent dans de nombreux documents, plus leur poids informationnel est faible.

Un calcul de l'entropie de l'information d'un groupe est effectué lors du calcul des poids sémantiques. Un groupe composé a un poids sémantique plus important ou égal à celui d'un mot simple. En cas d'ambiguïté syntaxique, le système aligne le poids sémantique du groupe de mots ayant le poids sémantique le plus faible pour ne pas attribuer un poids fort à un mot issu d'une erreur d'analyse.

La caractéristique la plus importante du système est le fait qu'il préfère renvoyer les réponses les plus proches plutôt que de ne pas fournir de réponse (silence). Le système peut donc renvoyer des documents qui peuvent être considérés comme bruit lorsqu'ils s'intercalent entre les documents pertinentes. L'utilisateur a la possibilité de naviguer librement par la suite dans les documents réponses du système. Il a également la possibilité de choisir un ordre différent de celui proposé par le système et de naviguer dans les documents choisis. Ceci donne une grande liberté à l'utilisateur contrairement à une approche plus tranchante où le système décide si le document est pertinent ou non.

Les réponses sont ordonnées de telle manière que l'utilisateur puisse choisir les classes qui correspondent à sa requête. Les classes ainsi visualisées s'apparentent à un système utilisant des mots clés avec des opérateurs booléens.

Les images réponses sont alors affichées par ordre de pertinence. L'utilisateur évalue les réponses fournies en fonction de ses attentes. Il indique ensuite par un jeux de boutons ses choix de telle façon que le système apprenne à le connaître pour améliorer ses réponses suivant le profil de l'utilisateur.

La Figure 25 illustre un exemple d'écran d'affichage d'une recherche textuelle à partir de la question en langue naturelle *"un petit nounours"* et ayant conduit à la citation de l'image de démonstration de la figure 1 contenue de façon indexée dans la base d'images 13.

Le système peut naturellement permettre d'obtenir un écran d'affichage de résultats plus détaillés comportant par exemple également la reproduction de l'image ou des images trouvées.

A partir de la base de données images 13 interrogeable par la sémantique créée avec le procédé conforme à l'invention, selon lequel les images introduites dans la base d'images 13 ont été analysées, décomposées automatiquement en composants élémentaires puis archivées, lors d'une recherche par un utilisateur, les requêtes peuvent mêler des aspects textuels et/ou graphiques, en utilisant dans les deux cas l'interrogation par le contenu. Pour les images, il s'agit de retrouver les images répondant à certains critères sur les textures, les couleurs ou les formes ou contenant un fragment spécifié par l'opérateur. Pour le texte, il s'agit de retrouver les descriptions d'images ayant des critères de similarité sémantiques avec la requête.

Le traitement des requêtes s'effectue de manière interactive, avec un temps de réponse réduit.

Les résultats de la recherche d'une image au moyen de ce système se présentent sous la forme de listes ordonnées suivant un critère synthétique des différents calculs de proximité mis en oeuvre.

Dans la description qui précède, on doit considérer que le terme "objet" s'applique à un élément constitutif d'une image au sens large qui ne correspond pas exclusivement à un objet matériel mais peut également avoir une signification symbolique.

**Revendications**

1. Procédé de création automatique, à partir d'images initiales non indexées, d'une base de données images interrogeable par son contenu sémantique,
**caractérisé en ce qu'**il comprend les étapes suivantes :

a) construire une première base de données indexées constituant un dictionnaire d'informations thématiques en utilisant des textes généraux de départ énumérant les constituants d'un thème qui sont soumis à une étape de découpage-normalisation conduisant à des listes de mots qui sont ensuite soumises à une analyse statistique pour déduire des poids des mots,
b) construire une deuxième base de données indexées constituant un vade-mecum regroupant un ensemble de descriptions textuelles d'objets élémentaires usuels sous la forme d'imagettes indexées de façon textuelle et picturale,
c) analyser chaque image initiale de façon globale pour identifier et répertorier différentes zones de l'image de façon grossière,
d) comparer chaque image initiale analysée de façon globale avec des images précédemment indexées dans la base de données images à constituer,
e) classer dans la base de données images une image initiale analysée de façon globale si le résultat de la comparaison avec des images précédemment indexées révèle un degré de similitude supérieur à un seuil prédéterminé, et sinon
f) analyser chaque image initiale de façon locale d'après les étapes suivantes :
g) au cours de l'analyse locale d'une image initiale, procéder à une pluralité de segmentations de cette image en composants homogènes en utilisant une pluralité de critères différents pour identifier et isoler une pluralité de séries d'objets (Ai, Bi, Ci,...) constitués par des imagettes segmentées associées à des descripteurs géométriques de boîtes englobantes desdits objets (Ai, Bi, Ci,...),
h) après l'étape consistant à procéder à une pluralité de segmentations, réaliser une fusion des résultats des procédés de segmentation,
i) caractériser par des valeurs numériques chacune des imagettes d'objet résultant d'une fusion après les opérations de segmentation et de fusion et associées à des descripteurs géométriques des boîtes englobantes des différents objets,
j) comparer chacune des imagettes d'objet résultant des opérations de segmentation et de fusion avec les imagettes indexées de la deuxième base de données indexées et fournir avec leur taux de pertinence la liste des descriptions textuelles d'objets élémentaires usuels en concordance avec lesdites imagettes d'objet résultant des opérations de segmentation et de fusion,
k) pour chacune des imagettes d'objet résultant des opérations de segmentation et de fusion, caractériser de façon textuelle la couleur par appariement de l'histogramme de chaque imagette convertie dans un espace de couleurs avec les termes d'un dictionnaire chromatique,
l) pour chacune des imagettes d'objet résultant des opérations de segmentation et de fusion, caractériser de façon textuelle la texture par appariement du vecteur caractéristique de l'objet avec ceux d'un dictionnaire de textures indexées,
m) déterminer les aspects géométriques des objets les uns par rapport aux autres, et caractériser de façon textuelle les relations spatiales et/ou les formes de ces différents objets, et
n) après analyse des différents constituants de l'image initiale à travers lesdites imagettes d'objet résultant des opérations de segmentation et de fusion associées à des descriptions textuelles d'objets élémentaires usuels, introduire ces données dans la base d'images à constituer.

2. Procédé selon la revendication 1, **caractérisé en ce que**, après l'étape m) de détermination des emplacements géométriques des objets les uns par rapport aux autres et de caractérisation de façon textuelle des relations spatiales de ces différents objets, dans une étape o), on établit à partir des relations de dépendance entre ces différents objets et d'une comparaison avec le dictionnaire d'informations thématiques, l'appartenance éventuelle de l'image initiale à un thème.

3. Procédé selon la revendication 1 ou la revendication 2, **caractérisé en ce que** après l'étape m) de détermination des emplacements géométriques des objets les uns par rapport aux autres et de caractérisation de façon textuelle des relations spatiales de ces différents objets, dans une étape p), on regroupe les informations textuelles de l'ensemble de l'image indexée, en liaison avec le vademecum.

4. Procédé selon l'une quelconque des revendications 1 à 3, **caractérisé en ce que** lors de l'étape e) de classement dans la base de données images, on caractérise des particularités de l'image initiale analysée par rapport à chacune des images précédemment indexées les plus similaires.

5. Procédé selon l'une quelconque des revendications 1 à 4, **caractérisé en ce que** l'étape h) de fusion des résultats des procédés de représentation consiste à ordonner par ordre décroissant de superficie l'ensemble des objets (Ai, Bi, Ci,...) résultant des segmentations afin d'obtenir une liste, puis, tant qu'il y a des objets non visités dans la liste, prendre le premier élément libre de la liste, regarder s'il y a une intersection entre cet élément et les éléments suivants libres de cette liste, s'il y a une intersection entre des objets issus de procédés de segmentation différents, construire un premier graphe (Gi) et marquer ces éléments comme étant non libres, de manière à obtenir une série de premiers graphes (Gi), recommencer les mêmes opérations à partir des mêmes objets (Ai, Bi, Ci,...) résultant des segmentations ordonnés par ordre croissant de superficie, de manière à obtenir une série de deuxièmes graphes (G'i), et regrouper l'ensemble des premier et deuxième graphes (Gi, G'i) de manière à réaliser la fusion des résultats des procédés de segmentation.

6. Procédé selon l'une quelconque des revendications 1 à 5, **caractérisé en ce que**, lors de l'étape g) de segmentation en composants homogènes des images analysées localement, en utilisant une pluralité de critères différents, on procède

   (i) à une détection des caractéristiques de texture via un filtrage équivalent à un banc de filtres passe-haut et passe-bas,
   (ii) à une détection chromatique et achromatique,
   (iii) à une détection des contours.

7. Procédé selon la revendication 6, **caractérisé en ce que** lors de l'étape g) de segmentation, la détection des caractéristiques de texture via un filtrage équivalent à un banc de filtres passe-haut et passe-bas comprend un processus de transformation en ondelettes qui est opéré d'une part sur des lignes puis sur des colonnes de l'image avec à chaque fois un filtre passe-bas, **caractérisé par** la formule

$$y(i) = 0,5 * x(i) + 0,5 \, y(i-1)$$

et un filtre passe-haut **caractérisé par** la formule

$$y(i) = 0,5 * x(i) - 0,5 \, y(i-1),$$

.

chaque élément (i, j) de la matrice 3D d'attributs résultant de la décomposition étant un vecteur caractérisant la distribution des valeurs des pixels au voisinage du point (i, j).

8. Procédé selon la revendication 7, **caractérisé en ce que**, après chaque opération de filtrage par un filtre passe-haut et un filtre passe-bas, on procède à une division par $2^n$ du nombre d'images obtenues de manière à diminuer le nombre de données à traiter, le nombre entier $\underline{n}$ étant d'autant plus grand que la résolution et la taille de l'image à traiter sont élevées.

9. Procédé selon la revendication 6 ou la revendication 7, **caractérisé en ce que** le processus de transformation en ondelettes est réitéré plusieurs fois sur $\underline{n}$ étages et **en ce que**, après une phase de lissage, on réduit en profondeur la taille de la matrice 3D d'attributs obtenue en ne retenant que le nombre d'images [2n + (n-1)] contenant le plus de détails.

10. Procédé selon l'une quelconque des revendications 7 à 9, **caractérisé en ce que** l'on effectue en outre un processus de recherche de la meilleure partition de la matrice d'attributs au sens de la maximisation de l'énergie.

**11.** Procédé selon l'une quelconque des revendications 6 à 10, **caractérisé en ce que** lors de l'étape g) de segmentation, la détection chromatique et achromatique comprend une étape de conversion de l'image vers le modèle HSV (Teinte-Saturation-Valeur), une étape de propagation achromatique pour éliminer l'arrière-plan, une étape d'ouverture effectuée lors d'une première itération pour éliminer le bruit et reconnecter les régions et, dans le cas d'une non-convergence en fin de cette première itération, une étape de fermeture effectuée lors d'une deuxième itération.

**12.** Procédé selon l'une quelconque des revendications 6 à 11, **caractérisé en ce que**, lors de l'étape g) de segmentation, la détection des contours avec un filtre optimal comprend une étape de conversion de l'image RGB (rouge-vert-bleu) en un seul plan de luminance, une étape de réalisation d'une moyenne afin d'éliminer le bruit lié à l'acquisition, une étape de calcul de gradients horizontaux et de gradients verticaux, une étape de sommation des deux images des gradients afin d'obtenir une seule image, une étape de calcul du minimum et du maximum de l'image obtenue afin de déterminer des valeurs haut et bas de seuillage, une étape de seuillage par hystérésis par rapport auxdites valeurs haut et bas de seuillage précédemment déterminées, une étape de réalisation d'une ouverture morphologique et une étape de réalisation de multiples fermetures morphologiques.

## Claims

**1.** A method of automatically creating an image database that is capable of being interrogated by its semantic content, the database being created from initial images that are not indexed, the method being **characterized in that** it comprises the following steps:

a) constructing a first indexed database constituting a thematic information dictionary using initial general texts enumerating the components of a theme which are subjected to a step of subdivision and normalization giving rise to lists of words which are subsequently subjected to statistical analysis to deduce the weights of the words;

b) constructing a second indexed database constituting a vade-mecum bringing together a set of textual descriptions of ordinary elementary objects in the form of thumbnail images that are indexed both textually and pictorially;

c) analyzing each initial image overall to identify and list various zones in the image coarsely;

d) comparing each initial image as subjected to overall analysis with images that have previously been indexed in the image database to be built up;

e) classifying an initial image that has been analyzed overall in the image database if the result of the comparison with the previously indexed images reveals a degree of similarity that is greater than a predetermined threshold; and otherwise

f) analyzing each initial image in local manner according to the following steps;

g) during local analysis of an initial image, proceeding with a plurality of segmentations of said image into uniform components by using a plurality of different criteria for identifying and isolating a plurality of series of objects (Ai, Bi, Ci...) constituted by segmented thumbnail images associated with geometrical descriptors for boxes covering said objects (Ai, Bi, Ci...) ;

h) after the step which consists in proceeding with a plurality of segmentations, fusing the results of the segmentation methods;

i) using digital values to characterize each of the object thumbnail images that result from fusion after the segmentation and fusion operations and associated with geometrical descriptors for boxes covering the various objects;

j) comparing each of the object thumbnail images that result from the segmentation and fusion operations with the indexed thumbnail images of the indexed second database and providing together with respective pertinence levels a list of textual descriptions of everyday elementary objects matching said object thumbnail images resulting from the segmentation and fusion operations;

k) for each object thumbnail image resulting from the segmentation and fusion operations, characterizing its color in textual manner by matching the histogram of each thumbnail image converted into a color space with terms from a chromatic dictionary;

l) for each object thumbnail image resulting from the segmentation and fusion operations, textually characterizing its texture by matching the characteristic vector of the object with those of a dictionary of indexed textures;

m) determining the geometrical aspects of the objects relative to one another, and **characterizing in** textual manner the spatial relationship and/or the shapes of the various objects; and

n) after analyzing the various components of the initial image via said object thumbnail images that result from the segmentation and fusion operations associated with textual descriptions of everyday elementary objects, putting said data into the image base that is to be made up.

**2.** A method according to claim 1, **characterized in that** after step m) of determining the geometrical locations of the objects relative to one another and of textually characterizing the spatial relationships between the various objects, performing a step o) of establishing whether an initial image belongs to a theme on the basis of dependency relationships between the various objects and a comparison with the thematic information dictionary.

**3.** A method according to claim 1 or claim 2, **characterized in that** after step m) of determining the geometrical locations of the objects relative to one another and of textually characterizing the spatial relationships of the various objects, performing a step p) in which the textual information for an entire indexed image is brought together in association with the vademecum.

**4.** A method according to anyone of claim 1 to 3, **characterized in that** during step e) of classification in the image database, special features of the initial image under analysis are characterized relative to each of the most similar previously-indexed images.

**5.** A method according to anyone of claim 1 to 4, **characterized in that** step h) of fusing the results of the representation methods consists in ordering the set of objects (Ai, Bi, Ci...) that results from the segmentation in order of decreasing area so as to obtain a list, and then so long as there remain unvisited objects in the list, in taking the first free element of the list, in checking to see whether said elements overlap any of the following elements in the list that are free, and if there is an overlap between objects derived from different segmentation methods, in constructing a first graph (Gi) and in marking said elements as being not free, so as to obtain a series of first graphs (Gi), in performing the same operations again using the same objects (Ai, Bi, Ci...) that result from segmentations ordered in order of increasing area, so as to obtain a series of second graphs (G'i) , and in combining the first and second graphs (Gi, G'i) so as to fuse the results of the segmentation methods.

**6.** A method according to anyone of claim 1 to 5, **characterized in that** during step g) of segmenting locally analyzed images into uniform components, by using a plurality of different criteria, the following are performed:

   (i) texture characteristics are detected by filtering equivalent to a bank of highpass and lowpass filters;
   (ii) chromatic and achromatic detection are performed; and
   (iii) outlines are detected.

**7.** A method according to claim 6, **characterized in that** during segmentation step g), the detection of texture characteristics via filtering equivalent to a bank of highpass filters and lowpass filters comprises a wavelet transformation process performed firstly on rows and then on columns of the image with on each occasion a lowpass filter **characterized by** the formula:

$$y(i) = 0.5 * x(i) + 0.5 y(i-1)$$

and a highpass filter **characterized by** the formula:

$$y(i) = 0.5 * x(i) - 0.5 y(i-1)$$

each element (i,j) of the 3D attribute matrix that results from the splitting being a vector characterizing the distribution of pixel values in the vicinity of the point (i,j).

**8.** A method according to claim 7, **characterized in that** after each operation of filtering by means of a highpass filter and a lowpass filter, the number of images obtained is divided by $2^n$ so as to reduce the amount of data to be processed, the integer n increasing with increasing resolution and size of the image to be processed.

**9.** A method according to claim 6 or claim 7, **characterized in that** the wavelet transformation process is reiterated several times over n stages, and **in that** after a smoothing stage, the size of the resulting 3D attribute matrix is reduced in depth by retaining only the [2n+(n-1)] images that contain the most detail.

**10.** A method according to anyone of claim 7 to 9, **characterized in that** a process is also performed of seeking the distribution of the attribute matrix that is best in the sense of maximizing energy.

11. A method according to anyone of claim 6 to 10, **characterized in that** during segmentation step g), chromatic and achromatic detection comprises a step of converting the image to the hue saturation value (HSV) model, an achromatic propagation step to eliminate the background, an opening step performed during a first iteration to eliminate noise and reconnect regions, and in the event of non-convergence at the end of this first iteration, a closure step performed during a second iteration.

12. A method according to any one of claims 6 to 11, **characterized in that** during segmentation step g), the detection of outlines using an optimum filter comprises a step of converting the image to red-green-blue (RGB) in a single luminance plane, a step of averaging in order to eliminate noise associated with acquisition, a step of computing horizontal and vertical gradients, a step of summing the two gradient images in order to obtain a single image, a step of computing the minimum and the maximum of the resulting image in order to determine high and low thresholding values, a hysteresis thresholding step relative to said high and low threshold values as previously determined, a step of performing morphological opening, and a step of performing multiple morphological closures.

**Patentansprüche**

1. Verfahren zur automatischen Erstellung, ausgehend von nicht indizierten Ausgangsbildern, einer Bilddatenbank, welche nach ihrem semantischen Inhalt abgefragt werden kann,
**dadurch gekennzeichnet, daß** es die folgenden Schritte umfaßt:

a) Aufbauen einer ersten Datenbank indizierter Daten, welche ein Verzeichnis themenbezogener Informationen bildet, unter Verwendung allgemeiner Texte als Ausgangspunkt, welche die Hauptelemente eines Themas anführen, wobei diese einem Schritt des Zerlegens-Standardisierens unterzogen werden, was zu Wortlisten führt, die danach einer statistischen Analyse unterzogen werden, um eine Gewichtung der Wörter abzuleiten,
b) Aufbauen einer zweiten Datenbank indizierter Daten, welche ein Vademecum bildet, welches einen Satz von Beschreibungen in Textform von elementaren Alltagsobjekten in Form von in textlich und bildlich indizierten Miniaturbildern zusammenfaßt,
c) globales Analysieren eines jeden Ausgangsbilds, um bestimmte Bereiche des Bilds grob zu identifizieren und zu erfassen,
d) Vergleichen eines jeden global analysierten Ausgangsbilds mit zuvor indizierten Bildern in der zu erstellenden Bilddatenbank,
e) Klassifizieren, in der Bilddatenbank, eines global analysierten Ausgangsbilds, wenn das Ergebnis des Vergleichs mit den zuvor indizierten Bildern einen Grad an Ähnlichkeit zeigt, welcher oberhalb einer zuvor bestimmten Schwelle liegt, und, wenn nicht,
f) lokales Analysieren eines jeden Ausgangsbilds entsprechend den folgenden Schritten:
g) im Verlauf des lokalen Analysierens eines Ausgangsbilds, Durchführen mehrerer Segmentierungen dieses Bilds in homogene Komponenten, unter Verwendung mehrerer unterschiedlicher Kriterien, zum Identifizieren und Isolieren mehrerer Serien von Objekten (Ai, Bi, Ci, ...), welche in segmentierten Miniaturbildern vorliegen, welche geometrischen Deskriptoren von Feldern zugeordnet sind, welche die Objekte (Ai, Bi, Ci) enthalten,
h) nach dem Schritt des Durchführens mehrerer Segmentierungen, Ausführen einer Fusion der Ergebnisse der Verfahren der Segmentierung,
i) Charakterisieren, mit Zahlenwerten, eines jeden der Miniaturbilder der Objekte, welches sich aus einer Fusion nach den Schritten der Segmentierung und der Fusion ergibt, und welches geometrischen Deskriptoren von Feldern zugeordnet ist, die unterschiedliche Objekte enthalten,
j) Vergleichen eines jeden der Miniaturbilder der Objekte, welches sich aus Schritten der Segmentierung und der Fusion ergibt, mit den indizierten Miniaturbildern der zweiten Datenbank indizierter Daten und Bereitstellen, zusammen mit dem jeweiligen Grad an Relevanz, der Liste von Beschreibungen, in Textform, von elementaren Alltagsobjekten, in Übereinstimmung mit den Miniaturbildern der Objekte, welche sich aus Schritten der Segmentierung und der Fusion ergeben,
k) für jedes der Miniaturbilder der Objekte, welches sich aus Schritten der Segmentierung und der Fusion ergibt, Charakterisieren, in Textform, der Farbe, durch Zusammenlegen des Histogramms eines jeden Miniaturbilds, welches in einen Farbraum transformiert ist, mit den Einträgen eines Verzeichnisses chromatischer Informationen,
l) für jedes der Miniaturbilder der Objekte, welches sich aus Schritten der Segmentierung und der Fusion ergibt, Charakterisieren, in Textform, der Textur, durch Zusammenlegen des charakteristischen Vektors des Objekts mit jenen eines Verzeichnisses indizierter Texturen,

m) Bestimmen der geometrischen Aspekte der Objekte relativ zueinander und Charakterisieren, in Textform, der räumlichen Beziehungen und/oder der Formen der unterschiedlichen Objekte und

n) nach Analysieren der unterschiedlichen Komponenten des Ausgangsbilds, durch die Miniaturbilder der Objekte, welche sich aus Schritten der Segmentierung und der Fusion ergeben, wobei diese den Beschreibungen, in Textform, der elementaren Alltagsobjekte zugeordnet sind, Einfügen der Daten in die zu erstellende Bilddatenbank.

**2.** Verfahren nach Anspruch 1, **dadurch gekennzeichnet, daß** nach dem Schritt m) des Bestimmens der geometrischen Anordnungen der Objekte relativ zueinander und des Charakterisierens, in Textform, der räumlichen Beziehungen dieser unterschiedlichen Objekte, in einem Schritt o) ausgehend von Abhängigkeitsbeziehungen zwischen den unterschiedlichen Objekten und von einem Vergleich mit dem Verzeichnis themenbezogener Informationen die eventuelle Zugehörigkeit des Ausgangsbilds zu einem Thema festgestellt wird.

**3.** Verfahren nach Anspruch 1 oder 2, **dadurch gekennzeichnet, daß** nach dem Schritt m) des Bestimmens der geometrischen Anordnungen der Objekte relativ zueinander und des Charakterisierens, in Textform, der räumlichen Beziehungen dieser unterschiedlichen Objekte in einem Schritt p) die Informationen, in Textform, des ganzen indizierten Bilds in Verbindung mit dem Vademecum zusammengefaßt werden.

**4.** Verfahren nach einem der Ansprüche 1 bis 3, **dadurch gekennzeichnet, daß** während des Schritts e) des Klassifizierens in der Bilddatenbank Besonderheiten des analysierten Ausgangsbilds relativ zu jedem der ähnlichsten zuvor indizierten Bilder charakterisiert werden.

**5.** Verfahren nach einem der Ansprüche 1 bis 4, **dadurch gekennzeichnet, daß** der Schritt h) des Fusionierens der Ergebnisse der Verfahren der Repräsentation besteht in einem Ordnen in absteigender Reihenfolge nach dem Flächeninhalt der Gesamtheit der Objekte (Ai, Bi, Ci ...), welche sich aus den Segmentierungen ergeben, um eine Liste zu erhalten, danach, solange es nicht aufgesuchte Objekte in der Liste gibt, in einem Nehmen des ersten freien Elements der Liste, in einem Nachsehen, ob es eine Überschneidung zwischen dem Element und den nachfolgenden freien Elementen dieser Liste gibt, wenn es eine Überschneidung zwischen den Objekten gibt, die aus unterschiedlichen Verfahren der Segmentierung stammen, in einem Erzeugen eines ersten Graphen (Gi) und in einem Markieren dieser Elemente als nicht frei, um so eine Reihe erster Graphen (Gi) zu erhalten, in einem erneuten Beginnen derselben Operationen, ausgehend von denselben Objekten (Ai, Bi, Ci, ...), welche sich aus Segmentierungen ergeben, geordnet in aufsteigender Reihenfolge nach dem Flächeninhalt, um so eine Reihe zweiter Graphen (G'i) zu erhalten, und in einem Zusammenfassen der Gesamtheit der ersten und der zweiten Graphen (Gi, G'i), um so eine Fusion der Ergebnisse der Verfahren der Segmentierung auszuführen.

**6.** Verfahren nach einem der Ansprüche 1 bis 5, **dadurch gekennzeichnet, daß** während des Schritts g) des Segmentierens in homogene Komponenten der lokal analysierten Bilder unter Verwendung mehrerer unterschiedlicher Kriterien durchgeführt werden:

(i) eine Detektion der Charakteristika der Textur mittels einer Filterung, äquivalent jener durch eine Filterbank von Hochpaß- und Tiefpaßfiltern,
(ii) eine Detektion chromatischer und achromatischer Informationen,
(iii) eine Detektion der Konturen.

**7.** Verfahren nach Anspruch 6, **dadurch gekennzeichnet, daß** während des Schritts g) des Segmentierens die Detektion der Charakteristika der Textur mittels einer Filterung, äquivalent jener durch eine Filterbank von Hochpaß- und Tiefpaßfiltern, einen Prozeß der Transformation in Wavelets umfaßt, welcher einerseits an den Zeilen, andererseits an den Spalten des Bilds vorgenommen wird, jedesmal mit einem Tiefpaßfilter, charakterisiert durch die Formel:

$$y(i) = 0{,}5 * x(i) + 0{,}5 y(i-1),$$

und mit einem Hochpaßfilter, charakterisiert durch die Formel:

$$y(i) = 0,5 * x(i) - 0,5y(i-1),$$

wobei jedes Element (i, j) der 3D-Matrix von Attributen, welche sich aus der Zerlegung ergibt, ein Vektor ist, der die Verteilung der Pixelwerte in der Nachbarschaft des Punkts (i, j) charakterisiert.

8. Verfahren nach Anspruch 7, **dadurch gekennzeichnet, daß** nach jeder Operation der Filterung durch ein Hochpaßfilter und ein Tiefpaßfilter eine Teilung durch $2^n$ der Anzahl erhaltener Bilder durchgeführt wird, um so die Anzahl der zu verarbeitenden Daten zu reduzieren, wobei die ganze Zahl n um so größer ist, je höher die Auflösung und die Größe des zu verarbeitenden Bilds sind.

9. Verfahren nach Anspruch 6 oder 7, **dadurch gekennzeichnet, daß** der Prozeß der Transformation in Wavelets auf n Stufen mehrmals wiederholt wird und nach einer Phase der Glättung die Größe der erhaltenen 3D-Matrix der Attribute durch ausschließliches Behalten der Anzahl der Bilder [2n + (n-1)], welche die meisten Details enthalten, wesentlich reduziert wird.

10. Verfahren nach einem der Ansprüche 7 bis 9, ferner **gekennzeichnet durch** Ausführen eines Prozesses der Suche nach der besten Teilung der Matrix der Attribute im Sinne der Maximierung der Energie.

11. Verfahren nach einem der Ansprüche 6 bis 10, **dadurch gekennzeichnet, daß** während des Schritts g) des Segmentierens die Detektion chromatischer und achromatischer Informationen einen Schritt des Transformierens des Bilds in das HSV-(Hue-Saturation-Value-)Modell, einen Schritt des Propagierens im achromatischen Bereich, um den Hintergrund auszuschalten, einen Schritt des Öffnens, ausgeführt während einer ersten Iteration, um das Rauschen auszuschalten und um die Bereiche erneut zu verbinden, und, im Fall einer Nichtkonvergenz am Ende der ersten Iteration, eines Schritts des Schließens, ausgeführt während einer zweiten Iteration, umfaßt.

12. Verfahren nach einem der Ansprüche 6 bis 11, **dadurch gekennzeichnet, daß** während des Schritts g) des Segmentierens die Detektion der Konturen mit einem optimalen Filter einen Schritt des Transformierens des Bilds, in RGB (Rot-Grün-Blau), in eine einzige Luminanzebene, einen Schritt des Ausführens einer Mittelung, um das Rauschen im Zusammenhang mit der Erfassung auszuschalten, einen Schritt des Berechnens horizontaler Gradienten und vertikaler Gradienten, einen Schritt des Summierens der zwei Bilder der Gradienten, um ein einziges Bild zu erhalten, einen Schritt des Berechnens des Minimums und des Maximums des erhaltenen Bilds, um einen oberen und einen unteren Wert zum Setzen einer Schwelle zu bestimmen, einen Schritt des Setzens einer Hysterese-Schwelle, bezogen auf den zuvor bestimmten oberen und unteren Wert zum Setzen der Schwelle, einen Schritt des Ausführens einer morphologischen Öffnung und einen Schritt des Ausführens mehrerer morphologischer Schließungen umfaßt.

**FIG.1**

| | |
|---|---|
| Affichage de l'image à l'écran afin de pouvoir choisir la catégorie de l'objet | 121 |

La catégorie existe - t - elle ? 121A

**oui** → Affichage de tous les objets de cette catégorie afin de choisir un objet similaire 122

**non** → Affichage d'une interface permettant à l'utilisateur de remplir les champs tels que le rôle, le nom, le contexte pour définir le plus précisément possible l'objet 125

122A

Le nom de l'objet existe - t - il ? 123

**non** → Affichage d'une interface permettant à l'utilisateur de spécifier précisément l'objet, avec des informations particulières à cet objet par rapport à la catégorie 124

**oui** → Affichage des informations particulières que l'utilisateur peut affiner pour cet objet en particulier

Remplissage d'un fichier de sortie 126

**FIG.4**

25

Image/texte —14

10

Question picturale
et/ou textuelle ⌐16

Indexation

Recherche ⌐17

15

11   12   13

Liste
de
documents
pertinents —18

## FIG.2

Un jouet est un
objet qui
permet de se
divertir. Une
balle,un ballon ,
un cerf-volant   111

111   Le repas est un
moment ou l'on
se restaure. Pour
ce faire on utilise
des assiettes,
verres, fourchettes

... —111

111

112

112

112

112

Découpage-normalisation

Découpage-normalisation

Découpage-normalisation

Découpage-normalisation

Jouet, objet, permettre, divertir.
Balle, ballon, cerf, volant,
cerf volant.

Repas, moment, restaurer.
Faire, utiliser, assiette,
verre, fourchette

113

113

113

113

114 —Analyse statistique

10

115 — Création et/ou mise à jour de la base

11

## FIG.3

Image Explorer

160

10

11   12   13

## FIG.5

4

130

Analyse perceptuelle

Analyse sémiotique

140

Photo horizontale de 384 * 307 pixels ayant pour couleur dominante une couleur sombre.
Le fond de cette photo est gris. Elle est composée de 3 objets.
Cette image a pour thème principal Jouet.
L'objet principal est en fait un nounours beige, qui se trouve à gauche de notre photo. Nous distinguons au centre de l'image une balle verte et blanche. Nous notons un cube multicolore à droite.

150

4

131

Segmentation

137

Space

42

41

43

Obj1 gauche obj2
Obj2 centre
Obj3 droite obj2

11

10

Dithem   Vade-mecum   Base d'images

132   Ares   133   Yeti   160   Ie

12   13

Im1
Rouge 12%
Vert 3 %

Im1
Bois 12%
Herbe 3 %

Im1
nounours 12%
chien 3 %

## FIG.6

134   135   136

131

6

51                          53

| Segmenteur A | Segmenteur B | Segmenteur C |

52

61        62        B1        64        65

A1    A2    B1    63    C1    C2

Fusion    54

**FIG.7**

66        Fichier de
          coordonnées

67

6

161            162
LH              LB

163 — (↓2)      (↓2) — 163

7               8

164 — CH    CB — 165    166 — CH    CB — 167

168 — (↓2)    (↓2) — 168    (↓2) — 168    (↓2) — 168

**FIG.8**

**FIG.9**

**44**

**FIG.12**

**FIG.10**

43     41     42

132 — ARES

73

Digital to Word ASCII file
created by PIMS v 2.02
BaseIMAGE/tmp_p13s15-
2_indexation/bloc0.tif

| 105 | 132 |
|---|---|
| 1 | |
| orange | 0.150794 |
| jaune | 0.130664 |
| vert | 0.001876 |
| bleu | 0.033622 |
| violet | 0.000000 |
| rose | 0.000000 |
| rouge | 0.000072 |
| marron | 0.007710 |
| noir | 0.196681 |
| **gris** | **0.281097** |
| blanc | 0.205195 |

La luminosite globale de
l'image est=moyenne
Les couleurs ont une
saturation=pale

71

Digital to Word ASCII file
created by PIMS v 2.02
BaseIMAGE/tmp_p13s15-
2_indexation/bloc1.tif

| 60 | 90 |
|---|---|
| 1 | |
| orange | 0.032778 |
| jaune | 0.053148 |
| vert | 0.016296 |
| **bleu** | **0.518518** |
| violet | 0.000000 |
| rose | 0.003704 |
| rouge | 0.215741 |
| marron | 0.018593 |
| noir | 0.122222 |
| gris | 0.032963 |
| blanc | 0.004630 |

La luminosite globale de
l'image est=moyenne
Les couleurs ont une
saturation=vive

72

Digital to Word ASCII file
created by PIMS v 2.02
/BaseIMAGE/tmp_p13s15-
2_indexation/bloc2.tif

| 79 | 80 |
|---|---|
| 1 | |
| orange | 0.000000 |
| jaune | 0.000000 |
| **vert** | **0.397468** |
| bleu | 0.015032 |
| violet | 0.000000 |
| rose | 0.000000 |
| rouge | 0.000000 |
| marron | 0.001000 |
| noir | 0.174051 |
| gris | 0.195728 |
| blanc | 0.217722 |

La luminosite globale de
l'image est=moyenne
Les couleurs ont une
saturation=pale

**FIG.11**

43     41     42

YETI

133     81

83

Digital to Word ASCII file create
BaseIMAGE/tmp_p13s15-2_ind

| 105 | 132 |
|---|---|
| 1 | |
| Bois | N |
| Herbe | N |
| Terre | N |
| Nuage | N |
| Pierre | N |
| Osier | N |
| Poils | O |
| Brique | N |

Digital to Word ASCII file created by PIMS v 2.02
BaseIMAGE/tmp_p13s15-2_indexation/bloc0.tif

| 105 | 132 |
|---|---|
| 1 | |
| Bois | N |
| Herbe | N |
| Terre | N |
| Nuage | N |
| Pierre | N |
| Osier | N |
| Poils | N |
| Brique | N |

82

Digital to Word ASCII file created by PIMS v 2.02
BaseIMAGE/tmp_p13s15-2_indexation/bloc0.tif

| 105 | 132 |
|---|---|
| 1 | |
| Bois | N |
| Herbe | N |
| Terre | N |
| Nuage | N |
| Pierre | N |
| Osier | N |
| Poils | N |
| Brique | N |

43

41

42

Vade-mecum

Ie —160

12

| 3 | |
|---|---|
| nounours | 100.0 |
| canette | 95.1 |
| lapin | 94.6 |

| 4 | |
|---|---|
| cube | 96.8 |
| canette | 96.4 |
| nounours | 95.8 |
| balle | 95.4 |

| 3 | |
|---|---|
| balle | 100.0 |
| nounours | 95.0 |
| canette | 94.9 |

93

91

92

# FIG.13

11

151

152

153

154

Dithem

Im1
nounours 12%
chien 3 %

Obj1 gauche obj2
Obj2 centre
Obj3 droite obj2

Im1
Rouge 12%
Vert 3 %

Im1
Bois 12%
Herbe 3 %

Thème

Relation
de
Dépendance

142

Projection par inférence

143

141

Reconstruction —144

147

Photo horizontale de 384 * 307 pixels ayant pour couleur dominante une couleur sombre.
Le fond de cette photo est gris. Elle est composée de 3 objets.
Cette image a pour thème principal Jouet.
L'objet principal est en fait un nounours beige, qui se trouve a gauche de notre photo. nous distinguons au centre de l'image une balle verte et blanche.Nous notons un cube multicolore a droite.

13

Analyse statistique

Base d'images

145

146

Création / mise à jour
de la base

# FIG.14

151

Objet :

| Im1<br>nounours 12% | Im3<br>cube 19% | Im2<br>Balle 15% |

171

Reformulation des termes de la description

Dithem

11

Comparateur 172

Thème :

Jouet 173

**FIG.15**

151

| Im1<br>nounours 12%<br>chien 3 % |

Obj1 gauche obj2<br>Obj2 centre<br>Obj3 droite obj2 152

142 — Relation de dépendance

174 — Balle centre<br>Nounours gauche balle<br>Cube droite balle<br>Nounours gauche cube

**FIG.16**

**FIG.17**

Im1
Vert 82%

Im1
Bois 1%
Herbe 1 %

Im1
Rouge 12%
Vert 3 %

Im1
Rouge 12%
Vert 3 %

153

12

Vade-mecum

Projection par inférence

143

Pomme verte : pomme pas mûre, granny

175

Camion rouge : pompier

176

**FIG.17**

173

174

Le thème

Jouet

couleur

Reconnaissance
d'objets

Im1
nounours 12%
chien 3 %

151

Balle centre
Nounours gauche balle
Cube droite balle
Nounours gauche cube

Im1
Rouge 12%
Vert 3 %

153

Texture

Projection
vide

Reconstruction

144

Im1
Bois 12%
Herbe 3 %

154

177

Photo horizontale de 384 * 307 pixels ayant pour
couleur dominante une couleur sombre.
Le fond de cette photo est gris. Elle est composée de 3
objets.
Cette image a pour thème principal Jouet.
L'objet principal est en fait un nounours beige, qui se
trouve à gauche de notre photo. Nous distinguons au
centre de l'image une balle verte et blanche. Nous
notons un cube multicolore à droite.

**FIG.18**

147

147

Photo horizontale de 384 * 307 pixels ayant pour
couleur dominante une couleur sombre.
Le fond de cette photo est gris. Elle est composée de 3
objets.
Cette image a pour thème principal Jouet.
L'objet principal est en fait un nounours beige, qui se
trouve à gauche de notre photo. Nous distinguons au
centre de l'image une balle verte et blanche. Nous
notons un cube multicolore à droite.

4

Image Explorer
en
indexation

160

Découpage - normalisation

181

Photo horizontale
Couleur dominante sombre
Fond gris
Photo composer 3 objets
Thème jouet
Objet principal nounours beige gauche photo
Balle verte blanche centre photo
Cube multicolore droite

182

145

Analyse statistique

Base d'images

13

Photo: 1 horizontale : 2 Couleur : 1
Jouet : 10 nounours : 20 beige : 15
gauche : 2 Balle : 19 Multicolore : 25

183

Création / mise à
jour de la base

146

**FIG.19**

204

?

202

Image explorer

10

11   12   13

203

Liste
des
images
pertinentes

**FIG.21**

201

LOCO en indexation

206

Texte

205

Recherche textuelle

Indexation de l'image

| | |
|---|---|
| Titre | p13s5.2 |
| Auteur | coco |
| Propriétaire | cea |

Gisement — Base à coco

Date de prise de vue ☐/☐/☐

Contenu — Photo horizontale de 384×307 pixels ayant
sombre. Le fond de cette photo est gris fonc
Cette image a pour thème principal Jouet.
beige , celui-ci se trouve à gauche de notre

Précision — nounours

Connotation — Bleu

Plan — Général
Ensemble
Moyen
Américain

Vue — Aérienne
Plongée
Contre-plongée
Frontale

FIG.20

? Je cherche une photo contenant un ours en peluche et d'autres jouets ?

214

Analyse linguistique 215

216
Reformulation de la question

10

11    12    13

Comparateur 217

Liste 218
des
images
résultats

**FIG.22**

214

? Je cherche une photo contenant un ours en peluche et d'autres jouets ?

Normalisation 221

223

Chercher
Photo
Contenir    222
Ours
Peluche
jouet

Recherche des
expressions
idiomatiques

224

Dictionnaire
des expressions
idiomatiques

227

Établissement
des relations
de dépendances

Recherche
des homographes

Dictionnaires
généraux

225    226

228

Chercher – Photo – Contenir – Ours – Peluche – jouet
Chercher photo – photo contenir – contenir photo –
Ours peluche – peluche jouet

**FIG.23**

Chercher – Photo – Contenir – Ours – Peluche – jouet
Chercher photo – photo contenir – contenir photo –
Ours peluche – peluche jouet

228

230

Réécriture de la question

Dictionnaire
de reformulation

229

Chercher : atteindre
Photo : image
Ours : Nounours
Jouet : jeu

231

Reformulation 232

Chercher – Photo – Contenir – Ours – Peluche – jouet
Chercher photo – photo contenir – contenir photo –
Ours peluche – peluche jouet
Chercher : atteindre
Photo : image
Ours : Nounours
Jouet : jeu

233

FIG.24

Système de localisation basé sur la sémantique et la connaissance extraite de l'image

| Netscape : Affichage de la liste des documents résultats |
| --- |

Analyse Linguistique de la question :

- Mots significatifs : petit, nounours, et jouet
- Mots outils : un

IL Y A 1 CLASSE(S) DE DOCUMENTS REPONSES TRIEE(S) PAR DEGRE DE PERTINENCE :

- p13s152 : Photo horizontale de 384×307 pixels ayant pour couleur dominante une couleur
sombre. Le fond de cette photo est gris foncé. Elle est composée de 3 objets.
Cette image a pour thème principal Jouet. L'objet principal est en fait un nounours
beige, celui-ci se trouve à gauche de notre photo. Nous distinguons au centre de
l'image une balle verte et blanche.
Nous notons, de plus un cube multicolore à droite.

[ Page d'accueil ] [ Liste des bases ] [ Interrogation ]

FIG.25

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2753820
- FR 2779848
- FR 2779868